(19) Europäisches Patentamt
European Patent Office
Office européen des brevets

(11) EP 0 961 756 B1

(12) **FASCICULE DE BREVET EUROPEEN**

(45) Date de publication et mention de la délivrance du brevet:
**09.07.2003 Bulletin 2003/28**

(21) Numéro de dépôt: **98908140.1**

(22) Date de dépôt: **06.02.1998**

(51) Int Cl.[7]: **C01G 35/00**, G02B 1/11

(86) Numéro de dépôt international:
**PCT/FR98/00229**

(87) Numéro de publication internationale:
**WO 98/034876 (13.08.1998 Gazette 1998/32)**

(54) **MATERIAU POLYMERIQUE INORGANIQUE A BASE D'OXYDE DE TANTALE, NOTAMMENT A INDICE DE REFRACTION ELEVE, MECANIQUEMENT RESISTANT A L'ABRASION, SON PROCEDE DE FABRICATION, ET MATERIAU OPTIQUE COMPRENANT CE MATERIAU**

ANORGANISCHES POLYMERMATERIAL AUF DER BASIS VON TANTALOXYD , INSBESONDERE MIT ERHÖHTEM BRECHUNGSINDEX , MECHANISCH VERSCHLEISSFEST , SEIN VERFAHREN ZUR HERSTELLUNG

INORGANIC POLYMERIC MATERIAL WITH TANTALIC ACID ANHYDRIDE BASE, IN PARTICULAR WITH HIGH REFRACTIVE INDEX, MECHANICALLY ABRASIONPROOF, METHOD OF MANUFACTURE, OPTICAL MATERIALS COMPRISING SUCH MATERIAL

(84) Etats contractants désignés:
**DE ES FR GB IT NL**

(30) Priorité: **10.02.1997 FR 9701486**

(43) Date de publication de la demande:
**08.12.1999 Bulletin 1999/49**

(73) Titulaire: **COMMISSARIAT A L'ENERGIE ATOMIQUE**
**75015 Paris (FR)**

(72) Inventeurs:
- **BELLEVILLE, Philippe**
  **F-92400 Courbevoie (FR)**
- **FLOCH, Hervé**
  **F-91480 Quincy-sous-Sénart (FR)**
- **PRENE, Philippe**
  **F-77300 Fontainebleau (FR)**

(74) Mandataire: **Audier, Philippe André et al**
**Brevalex,**
**3, rue du Docteur Lancereaux**
**75008 Paris (FR)**

(56) Documents cités:
**EP-A- 0 008 215**
**FR-A- 2 635 530**
**US-A- 2 466 119**
**US-A- 2 584 905**
**US-A- 4 271 210**

- **REHG T J ET AL: "SOLGEL DERIVED TANTALUM PENTOXIDE FILMS AS ULTRAVIOLET ANTIREFLECTIVE COATINGS FOR SILICON" APPLIED OPTICS, vol. 28, no. 24, 15 décembre 1989, pages 5215-5221, XP000086699 cité dans la demande**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un matériau polymérique inorganique à base d'oxyde de tantale, notamment à indice de réfraction élevé et mécaniquement résistant à l'abrasion, son procédé de fabrication mettant en particulier en jeu des précurseurs à base de dérivés chlorés du tantale, ainsi que les matériaux optiques tels que des matériaux antireflets et des matériaux réfléchissants fabriqués à partir de ce matériau.

Les matériaux antireflets et les matériaux réfléchissants sont composés d'un substrat organique ou inorganique, recouvert de plusieurs couches dont certaines présentent des propriétés optiques spécifiques recherchées. Plus précisément, les miroirs diélectriques interférentiels comprennent un substrat, recouvert d'un film diélectrique qui réfléchit une ou plusieurs longueurs d'ondes souhaitées, tout en présentant une absorption intrinsèque relativement faible comparativement aux métaux classiquement utilisés pour la réalisation de miroirs.

Les matériaux antireflets ou réfléchissants présentent une multitude d'applications.

Ainsi les substrats organiques ou inorganiques, c'est à dire notamment les plastiques ou les substrats vitreux, revêtus d'un film antireflet présentent un intérêt tout particulier dans les domaines suivants: les produits ophtalmiques et vidéo ou les applications architecturales comme les panneaux vitrés placés à l'extérieur ou à l'intérieur des bâtiments. En outre, les matériaux antireflets et les miroirs diélectriques interférentiels peuvent également être utilisés dans les lasers de forte énergie, les applications solaires, thermiques et photovoltaïque ou encore dans les systèmes optiques intégrés.

On connaît déjà d'après l'art antérieur, des procédés permettant de réaliser ces matériaux antireflets ou des miroirs diélectriques interférentiels. Ces procédés sont mentionnés ci-après.

Par ailleurs, si dans le secteur ophtalmique, les plastiques tels que les polycarbonates, les polyacrylates, les polyallylcarbonates et autres, sont particulièrement intéressants, les substrats vitreux sont également intéressants, notamment dans le domaine de l'optique générale et dans le domaine des écrans tels que les écrans de visualisation.

Or, on comprend facilement qu'à raison d'environ 4% de perte en réflexion pour chaque interface air-verre rencontrée, l'indice moyen du verre étant de 1,5, le bilan des pertes pour un système optique complexe est souvent lourd.

En conséquence, les opticiens ont depuis longtemps cherché à créer des revêtements à propriétés optiques et notamment des films antireflets, grâce à des procédés physiques de dépôts sous vide, regroupées sous la dénomination de technologie PVD (Physical Vapor Deposition).

Parmi ces méthodes, on compte la pulvérisation simple ou réactive, l'évaporation simple ou réactive par chauffage électronique ou ionique avec ou sans assistance, etc...

En dépit de l'excellente qualité optique, chimique et mécanique des dépôts, ces techniques nécessitent des équipements sophistiqués lourds et coûteux et les procédés sont plutôt longs. Ceci est d'autant plus vrai que la surface des composants à traiter devient importante. Il en résulte que de tels procédés sont généralement mal adaptés à la production de séries bon marchés.

Par exemple, seuls les écrans de tube cathodique pour téléviseurs très haut de gamme sont à l'heure actuelle munis de revêtements antireflets appliqués par « PVD ».

C'est la raison pour laquelle les procédés de dépôt par voie chimique douce et en particulier les procédés de dépôts par voie sol-gel apparaissent comme une alternative intéressante aux procédés physiques de dépôt sous vide.

Le procédé de dépôt par voie sol-gel permet l'élaboration de films disposés sur des substrats et présentant des propriétés optiques diverses. Un tel procédé présente par rapport aux procédés classiques de dépôt sous vide un certain nombre d'avantages parmi lesquels on peut notamment mentionner, un dépôt généralement réalisé à température ambiante et à pression atmosphérique sans avoir recours à une étape thermique à des températures trop élevées, un capital équipement réduit, et une mise en oeuvre simple, rapide, du procédé, permettant ainsi une grande souplesse d'utilisation.

Les dépôts d'oxydes métalliques ou non métalliques à propriétés optiques par procédé sol-gel ont été très largement étudiés. Il apparaît que les systèmes ou procédés sol-gel peuvent être classés en deux catégories: les procédés ou systèmes polymériques et les procédés ou systèmes colloïdaux.

Chaque système nécessite différentes préparations et conditions opératoires qui dépendent des propriétés des solutions traitantes désirées et de la nature de l'oxyde concerné.

Le système polymérique consiste à utiliser comme précurseurs, des espèces monomériques, oligomériques ou de bas poids moléculaire, mises en solution, avec une bonne homogénéité moléculaire et qui sont ensuite converties en oxyde, après application sur le substrat, par une étape de cuisson. Le liquide déposé change éventuellement de viscosité au fur et à mesure de l'évaporation du solvant jusqu'à former un gel sur le substrat. Le réseau solide obtenu encore gorgé de solvant est ensuite transformé en oxyde en chauffant le système généralement à des températures élevées jusqu'à 500°C. On obtient alors une couche dense et dure, adhérant fortement au substrat. la conversion en oxyde s'accompagne généralement d'une forte perte de masse constituée d'eau et de matières organiques entraînant une diminution importante l'épaisseur de la couche. Ceci induit de fortes contraintes internes, tensives ou compressive,

dans le dépôt qui peuvent provoquer le faïençage du revêtement dans le cas de films mono- ou multi-composants épais, c'est à dire dont l'épaisseur est supérieure à quelques µm.

Par exemple, les brevets allemands DE-A-736 411 et DE-A-937 913 mentionnent l'emploi de composés hydrolysables pour la préparation de films interférentiels divers. L'inconvénient majeur de ces procédés réside dans l'indispensable traitement thermique entre 500 et 600°C pour convertir les intermédiaires polymériques en céramiques finales denses. Ces températures élevées limitent le choix de la nature du substrat à revêtir et compliquent la mise en oeuvre industrielle.

Le brevet US-A-2 466 119 décrit un procédé de préparation de films réfléchissants et/ou antireflets multicouches, par hydrolyse et condensation de mélanges d'halogénures de titane et/ou d'alkoxydes de silicium. Le contrôle de la porosité de ces couches s'effectue en faisant varier la température. Toutefois, l'obtention de couches présentant une bonne résistance mécanique nécessite le chauffage à des températures très supérieures à celle que peuvent supporter les plastiques usuels dont la stabilité thermique est généralement de 150°C au maximum.

Le brevet US 2 584 905 traite de la préparation de couches minces réfléchissantes à partir de solutions alcooliques de $TiCl_4$ et d'un alkoxyde de silicium. Là encore, il est nécessaire de recourir à une étape de traitement thermique à haute température permettant de densifier de façon convenable les oxydes. Dans ce procédé, les problèmes de faïençage et d'écaillage liés à la densification des matériaux, réduisent considérablement l'élaboration d'édifices multicouches à haute réflexion.

Le brevet US 3 460 956 décrit la préparation de films réfléchissants en $TiO_2$ à partir d'hydrolysats de tétraalkyle titanates, en milieu alcoolique. Toutefois, pour une conversion efficace en oxyde dense, du film polymérique, ce dernier doit subir un chauffage élevé, aux environs de 500°C, donc pénalisant et préjudiciable pour tout substrat organique.

Les brevets US 2 768 909 et 2 710 267 décrivent la production de films réfléchissants en $TiO_2$ à partir de sols alcooliques d'un alcoxyde de titane, ces sols étant hydrolysables par l'humidité atmosphérique. Cette approche requiert également une forte cuisson des intermédiaires condensés et les couches obtenues ne sont pas résistantes à l'abrasion.

Le brevet US 4 272 588 concerne la possibilité d'accroître la réflectivité de miroirs en métaux nobles ainsi que la possibilité de rendre chimiquement passif ces derniers, par le dépôt de couches de diélectriques $TiO_2$ et $Ta_2O_5$ issus de précurseurs moléculaires.

De tels revêtements sont obtenus par un chauffage obligatoire aux environs de 400°C.

Ainsi, on utilise généralement comme matériau polymérique pour les couches minces optiques d'indice de réfraction élevé (compris par exemple entre 1,9 et 2,1) l'oxyde de titane ($TiO_2$). Cependant, pour obtenir des couches mécaniquement résistantes à l'abrasion, la densification doit être effectuée à haute température voisine de 400 °C, ce qui n'est pas envisageable par exemple pour des substrats plastiques.

Le document US-A-4 328 260 décrit un procédé et une composition pour appliquer un traitement antireflet et une grille sur des cellules solaires qui comprend l'application d'un masque sur la surface de la cellule, l'application d'une pâte d'alcoxyde de métal (Ta ,Ti, Nb ,Y ,Zr ,Te ) sur le masque, et le chauffage de la cellule à une température de 300 °C à 550°C pour décomposer l'alcoxyde et former l'oxyde métallique.

Les surfaces restantes sont plaquées avec du nickel pour former une grille métallique. L'application à la fois d'un revêtement antireflet et d'une grille font que les problèmes qui se posent dans ce document sont fondamentalement différents de ceux de la présente demande, de plus les températures mises en oeuvre pour conduire à l'oxyde métallique sont très élevées et incompatibles avec un substrat tel qu'un substrat organique, en outre, l'application d'une pâte sur un substrat ne permet pas un contrôle précis de l'épaisseur déposée.

Le document JP-A-55 010455 est relatif à la préparation d'un revêtement antireflet sur un substrat de silicium par dépôt d'un mélange d'alcoxyde de tantale et d'un complexant tel que l'acide acétique et chauffage à une température de 200 à 800°C.

Cependant, un tel procédé présente l'inconvénient que la stabilité des solutions d'alcoxydes est très réduite, leur prix élevé, et que les températures mises en oeuvre ne conviennent pas pour tous les substrats.

Le document de T.OHISHI et al. « Synthesis and properties of Tantalum oxide films prepared by the sol-gel method using photo-irradiation » Journal of Non-crystalline Solids, 147, 148 (1992) 493-498 décrit la préparation de couches minces diélectriques de $Ta_2O_5$ par dépôt de solutions d'éthoxyde de tantale et exposition aux rayons ultraviolets. Les inconvénients d'un tel procédé sont liées à l'utilisation d'alcoxyde de tantale en tant que précurseur, et les couches minces préparées sont issues de solutions instables subissant une photo-irradiation.

Enfin, le document de T.J.REHG et al. « Solgel derived tantalum pentoxide films as ultraviolet antireflective coating for silicon », Applied Optics, 15.12.1989, Vol.28, N.24, p 5215-, décrit un procédé de préparation de revêtements antireflets sur du silicium par dépôt d'une solution de pentaéthoxyde de tantale et traitement thermique à une température de 300 à 1000°C.

L'autre procédé ou système de dépôt par voie sol-gel est le procédé ou système colloïdal dans lequel on utilise des dispersions de petites particules en particulier d'oxydes ou de fluorures, cristallisées ou amorphes déjà formées chimiquement en solution, avec un diamètre préférentiellement de l'ordre de quelques dizaines de nanomètres

pour des applications optiques. Les particules sont préalablement préparées par procédé sol-gel ou synthèse hydrothermale, soit en favorisant un mécanisme de germination-croissance puis en stabilisant le système à un degré de nucléation voulu, soit par précipitation-peptisation dans un solvant adapté, pour donner des suspensions colloïdales, ces suspensions constituant ce que l'on appelle un « sol ».

Lors du dépôt, l'évaporation du solvant - celui-ci étant choisi suffisamment volatil pour s'évaporer facilement - entraîne une augmentation de la concentration en particules qui, dans la plupart des cas, précipitent sur le substrat.

Le revêtement résultant est poreux, sans contrainte interne et mécaniquement non-résistant à l'abrasion.

Des exemples de réalisation de couches sol/gel par un tel procédé sont décrits notamment dans la demande de brevet US 7 148 458 (NTIS) correspondant aux brevets US 4 929 278 et US 4 966 812 dans les brevets US 2 432 483 et US 4 271 210.

La demande de brevet US 7 148 458 (NTIS), décrit un procédé de dépôt de film antireflet sur des substrats en plastique, consistant à synthétiser un gel éthanolique dans le système $SiO_2$-$B_2O_3$-$Al_2O_3$-BaO jusqu'à obtenir une certaine complexité moléculaire, puis à reliquéfier ce gel en cassant mécaniquement certains ponts interpolymériques. On obtient ainsi un film poreux à faible indice de réfraction (environ 1,23), réalisé à température ambiante, ce qui permet une adaptation aux substrats en plastique ; toutefois ce film ne présente qu'une médiocre résistance à l'abrasion.

Les brevets américains 2 432 483 et 4 271 210 divulguent la possibilité d'utiliser des colloïdes de silice ou d'alumine pour la réalisation de revêtements diélectriques antireflets, permettant d'augmenter la porosité de ces revêtements et donc d'abaisser leur indice de réfraction. Si ces procédés présentent l'avantage de pouvoir être mis en oeuvre à de basses températures, les couches colloïdales obtenues ont une très faible résistance mécanique et sont particulièrement sensibles à tout contact physique.

Par ailleurs, l'article intitulé « Colloïdal Sol-Gel Optical Coatings », paru dans « the American Ceramic Society Bulletin », vol.69, n°7, pp. 1141-1143, 1990, décrit un procédé de dépôt de couches minces par voie sol/gel utilisant l'enduction centrifuge.

Cet article précise qu'en utilisant des suspensions colloïdales sol-gel et qu'en choisissant judicieusement des solvants volatils pour constituer la phase liquide du milieu colloïdal, il est possible d'effectuer des traitements à température ambiante, sans chauffage excessif du substrat. Cette technique permet donc de traiter des matériaux thermiquement fragiles.

Toutefois, la nature même de ces films colloïdaux, c'est-à-dire poreux, sous-entend une faible résistance mécanique de ces films, tant du point de vue de l'abrasion, que de celui de l'adhésion au substrat sur lequel ils ont été déposés. De tels dépôts ne supportent donc aucun contact physique que ce soit le toucher ou l'essuyage, sans être endommagés. Les seules forces de cohésion qui existent dans ces films colloïdaux sont du type adsorption physique et il n'existe aucune liaison chimique entre les particules et le substrat, ni entre les particules elles-mêmes.

La tenue mécanique peut être cependant nettement améliorée par l'ajout d'un liant entre les particules. Ce liant, véritable « joint » chimique inter-particulaire peut être de nature organique, inorganique ou hybride. Il renforce la cohésion mécanique du système.

On connaît ainsi d'après l'art antérieur, au moins trois documents faisant référence à une amélioration significative de la tenue mécanique des couches minces optiques à base de silice colloïdale ($SiO_2$).

Le brevet US 2 432 484 divulgue l'utilisation d'un produit composé d'alcool, de catalyseur et de tétraéthylorthosilicate et servant de liant chimique entre les particules colloïdales, de manière à renforcer la cohésion de l'édifice poreux. Ce liant chimique est soit appliqué sur la couche de silice colloïdale déjà déposée, soit incorporé dans le milieu traitant (c'est-à-dire le sol colloïdal) et l'ensemble est appliqué en un seul traitement. Compte tenu de la proportion de liant chimique utilisé, la porosité du dépôt colloïdal peut rester quasiment inchangée et l'on conserve de ce fait les propriétés optiques. La résistance mécanique du film ainsi renforcé autorise le toucher et l'essuyage. De plus, un traitement thermique supplémentaire du revêtement à faible température, c'est-à-dire aux environs de 100°C, permet d'améliorer encore cette résistance. Toutefois, un tel dépôt reste vulnérable en cas de forte agression abrasive.

On connaît également d'après un article de R.G MUSKET et al., du Lawrence Livermore national Laboratory de Californie, paru dans Appl. Phys. Lett., vol. 52(5), 1988, un procédé d'accroissement de l'adhésion de l'interface oxyde/oxyde, à l'aide d'un faisceau d'ions. Les auteurs décrivent un traitement par irradiation à 200 keV, d'ions hélium $He^+$ de couches antireflets à base de silice colloïdale. Ce traitement permet d'améliorer l'adhésion des particules entre elles et des particules avec le substrat, ce qui assure à la couche ainsi traitée une résistance au nettoyage optique habituel (essuyage) sans modification des performances optiques. L'explication avancée pour ce phénomène repose sur une réactivité de surface des particules colloïdales, accrue grâce au bombardement ionique.

La demande de brevet français n°93 03987 du 5 Avril 1993 du CEA décrit un procédé d'amélioration de la résistance à l'abrasion de couches minces à propriétés optiques antireflets grâce à l'utilisation de réactifs alcalins après dépôt du film. Cependant, bien qu'un tel procédé soit réalisé à température et pression ordinaires, la résistance à l'abrasion de telles couches est insuffisante pour une utilisation « grand public ».

Le brevet français FR-A-2 680 583 du CEA décrit un matériau présentant des propriétés antireflets, ainsi que

des propriétés hydrophobes et de résistance à l'abrasion. Ce matériau comprend un substrat de nature organique ou inorganique, recouvert successivement d'une couche de promoteur d'adhérence réalisée dans un matériau choisi parmi les silanes, d'une couche antireflet de colloïdes de silice enrobés d'un liant siloxane, d'une couche antiabrasive d'un polymère fluoré. Toutefois, ce matériau présente une fenêtre de transmission spectrale typique d'un revêtement monocouche, de l'ordre de 100 nm seulement et une résistance à l'abrasion honnête sans être à toute épreuve.

La demande de brevet français FR 2 682 486 du CEA fait état de la préparation de miroirs diélectriques à haute tenue au flux laser, par un procédé réalisé à température ambiante, ce qui permet une adaptation aux substrats organiques. Les couches minces présentant les propriétés optiques souhaitées sont préparées à partir de suspensions colloïdales, que l'on dépose en alternant un matériau à faible indice de réfraction avec un matériau à indice de réfraction élevé.

Toutefois, les couches colloïdales utilisées sont par nature poreuses, ce qui se traduit par un indice de réfraction faible, comparé à l'indice d'un film du même matériau sous forme dense. Par conséquent, à réflectivité équivalente, il est nécessaire d'empiler un nombre plus important de couches pour palier cette différence d'indice ce qui implique un traitement plus long, allant de pair avec une fragilisation du revêtement optique.

La demande de brevet français FR 93 08762 du CEA fait état de la préparation de matériaux composites à indice de réfraction élevé, caractérisé en ce qu'ils comprennent des colloïdes d'oxyde de métal enrobés dans un polymère polyvinylique, soluble dans un solvant alcoolique. Le polymère organique enrobant les colloïdes entraîne une diminution de la porosité ouverte résiduelle entre les particules d'oxyde. Il en résulte une augmentation de l'indice de réfraction de la couche déposée, un accroissement des propriétés mécaniques de résistance à l'abrasion par rapport à la couche colloïdale correspondante puisque le polymère sert de liant entre les particules, et une amélioration de la tenue au flux laser.

Cependant, l'amélioration des propriétés mécaniques de résistance à l'abrasion de la couche obtenue nécessite l'utilisation de couches de promoteurs d'adhérence ou de couches d'agents de couplage. Ceci augmente les temps de fabrication et les coûts de production. De plus, les propriétés mécaniques de résistance à l'abrasion restent insuffisantes en particulier dans le cas d'une application grand public, par exemple, dans le cas de la réalisation du traitement antireflet d'écrans, notamment d'écrans à tubes cathodiques pour téléviseurs ou autres.

L'invention a donc pour but, entre autres, de surmonter les inconvénients de l'art antérieur cité plus haut et de fournir un matériau, notamment à indice de réfraction élevé, présentant de bonnes caractéristiques de résistance mécanique, c'est-à-dire entre autres une bonne résistance à l'abrasion et une adhésion satisfaisante sur tout substrat.

L'invention a également pour but de préparer des matériaux à propriétés optiques, utilisant le matériau selon l'invention, notamment à indice de réfraction élevé.

Les matériaux à propriétés optiques sont par exemple, des matériaux présentant des propriétés antireflets sur une large ou étroite bande spectrale et de bonnes propriétés, entre autres, d'hydrophobie et de résistance à l'abrasion impliquant de ce fait un nettoyage facile, soit des matériaux réfléchissants présentant des propriétés de résistance à l'abrasion.

Ce but et d'autres encore sont atteints conformément à l'invention par un matériau polymérique inorganique à base d'oxyde de tantale densifié, réticulé, par un traitement thermique à une température inférieure à 200°C, ou par une insolation aux rayons ultraviolets, et en ce que ledit matériau comporte en outre des ions halogénure résiduels. Ce matériau est un matériau notamment à indice de réfraction élevé, et, entre autres, mécaniquement résistant à l'abrasion.

Selon les caractéristiques de l'invention, le matériau comprend plus particulièrement un polymère inorganique d'oxyhydroxyde de tantale densifié ou réticulé et les ions halogénures résiduels sont par exemple des ions chlorures.

Un polymère selon l'invention est obtenu à partir d'un composé moléculaire ou précurseur moléculaire à base de tantale, soluble dans un solvant, de préférence un solvant alcoolique, qui donne un film (ou couche) polymérique inorganique après densification ou réticulation par exemple par traitement thermique et/ou insolation par des rayons ultra-violets, ou autres.

Selon l'invention la réticulation-densification thermique est réalisée à température modérée, peu élevée, à savoir inférieure à 200°C, de préférence inférieure ou égale à 150°C, notamment de 100 à moins de 200°C, et le précurseur moléculaire est un composé halogèné, par exemple chloré, du tantale.

Grâce aux caractéristiques de l'invention, le composé moléculaire à base de tantale réagit avec l'eau présente dans l'humidité ambiante et forme un polymère inorganique pendant la formation du film. L'étape de densification entraîne une réticulation de ce réseau inorganique, soit la formation de liaisons chimiques covalentes tantale-oxygène-tantale. Il en résulte une augmentation de l'indice de réfraction de la couche déposée, liée à la densification du réseau inorganique, et un accroissement des propriétés mécaniques de résistance à l'abrasion.

Le matériau selon l'invention est « à base » d'oxyde de tantale c'est-à-dire qu'il peut être constitué uniquement d'oxyde de tantale mais il peut également comprendre outre cet oxyde au moins un autre oxyde métallique ou de métalloïde choisi de préférence parmi l'oxyde de titane, l'oxyde de silicium, l'oxyde d'yttrium, l'oxyde de scandium, l'oxyde de hafnium, l'oxyde de thorium, l'oxyde de niobium, l'oxyde de zirconium, l'oxyde de lanthane, l'oxyde d'aluminium et l'oxyde de magnésium dans une proportion par exemple de 1 à 99 %, de préférence de 10 à 90 %, en masse, par rapport à la masse totale des oxydes métalliques ou de métalloïdes.

De tels composés permettent de faire varier les propriétés du matériau à base d'oxyde de tantale, en particulier l'indice de réfraction et la résistance à l'abrasion.

Il est ainsi possible d'obtenir par exemple des indices élevés avec un matériau polymérique uniquement constitué d'oxyde de tantale ou avec un matériau polymérique comprenant outre l'oxyde de tantale au moins un autre oxyde métallique ou de métalloïde choisi parmi les oxydes métalliques ou de métalloïdes déjà cités plus haut, de préférence à l'exception de l'oxyde de silicium et de l'oxyde de magnésium.

Il sera également possible d'obtenir des indices élevées, moyens ou faibles avec un matériau polymérique comprenant outre l'oxyde de tantale par exemple au moins de l'oxyde de silicium et/ou de magnésium.

L'invention concerne également un procédé de préparation et de dépôt de ce matériau polymérique. Selon les caractéristiques de l'invention, ce procédé comprend les étapes consistant à :

- préparer une solution (1) dans un solvant (3) comprenant un composé moléculaire précurseur à base de tantale choisi parmi les pentahalogénures de tantale $TaX_5$, avec X = F, Br, Cl ou I ;
- mélanger éventuellement ladite solution (1) avec une solution dans un solvant de même nature comprenant un composé de métal ou de métalloïde autre que le tantale, ou ajouter ledit composé de métal ou de métalloïde à ladite solution (1) ; moyennant quoi on obtient une solution (2)
- déposer la solution obtenue sur un support pour former une couche uniforme de matériau polymérique, et
- réticuler, densifier, cette couche polymérique à base d'oxyde de tantale, par un traitement thermique à une température inférieure à 200°C, ou par une insolation aux rayons ultraviolets, éventuellement suivie d'une étape de recuit, ou de post-traitement thermique.

Selon l'invention, cette réticulation-densification est réalisée par un traitement thermique à une température modérée, peu élevée, par exemple, de 100 ou 120°C à moins de 200°C, de préférence n'excédant pas 150°C et/ou par une insolation aux rayons UV notamment de longueur d'onde comprise entre 180 et 280 nm environ, ou par toute autre méthode de réticulation permettant d'effectuer la réticulation voulue à température ambiante ou à température modérée.

Avantageusement, la température de réticulation du matériau polymérique n'excédant pas 150°C, et étant même la température ambiante dans le cas d'une insolation UV ou autre, le procédé est donc applicable à des substrats en matière plastique ou en tout autre matériau ne supportant pas des températures de traitement élevées.

En outre, dans le cas d'une réticulation-densification par les UV, le procédé peut être réalisé en une durée notablement plus courte.

L'invention concerne également un matériau optique, caractérisé en ce qu'il comprend un substrat de nature organique ou inorganique recouvert par au moins une couche du matériau polymérique précédemment décrit à base d'oxyde de tantale, à indice de réfraction élevé , moyen, ou faible et mécaniquement résistant à l'abrasion.

L'invention a également trait à un tel matériau optique caractérisé en ce qu'il comprend outre une couche de matériau polymérique à base d'oxyde de tantale à indice de réfraction élevé, au moins une couche choisie parmi

- une couche à faible indice de réfraction par exemple à base de colloïdes d'oxyde de silicium, de réfraction élevé , moyen, ou faible et mécaniquement résistant à l'abrasion.

L'invention a également trait à un tel matériau optique caractérisé en ce qu'il comprend outre une couche de matériau polymérique à base d'oxyde de tantale à indice de réfraction élevé, au moins une couche choisie parmi

- une couche à faible indice de réfraction par exemple à base de colloïdes d'oxyde de silicium, de fluorure de calcium ou de fluorure de magnésium enrobés ou non d'un liant siloxane, ou d'oxyde de silicium sous forme polymérique
- une couche à indice de réfraction moyen formée par exemple d'un matériau à base d'oxyde de tantale et d'un autre oxyde de métal ou de métalloïde
- une couche antiabrasive à base par exemple de silane fluoré.

Selon l'invention les couches à faible et à moyen indice de réfraction sont de préférence des couches polymériques densifiées-réticulées de préférence dans les mêmes conditions que la couche à indice de réfraction élevée.

En outre, l'invention concerne également deux types particuliers de matériaux optiques, à savoir un matériau antireflet bande étroite ou large bande, et un miroir diélectrique.

Le matériau antireflet est caractérisé en ce qu'il comprend un substrat de nature organique ou inorganique recouvert successivement par

- une couche du matériau polymérique à base d'oxyde de tantale à indice de réfraction élevé et mécaniquement résistant à l'abrasion précédemment décrit,
- une couche à faible indice de réfraction à base par exemple de colloïdes d'oxyde de silicium, de fluorure de calcium ou de fluorure de magnésium enrobés ou non d'un liant siloxane, ou d'oxyde de silicium sous forme polymérique.

Un tel matériau sera plutôt un matériau antireflet à « bande étroite » mais extrêmement performant et convenant en particulier pour des applications en lunetterie.

Si le matériau antireflet comprend, en outre, appliquée sur le substrat au dessous de la couche du matériau polymérique à base d'oxyde de tantale à indice de réfraction élevé, une couche à indice de réfraction moyen (« couche du bas »), formée de préférence selon l'invention d'un matériau polymérique à base d'oxyde de tantale et d'un autre oxyde de métal ou de métalloïde, de préférence l'oxyde de silicium, on obtient alors un matériau antireflet dit à « large bande »; la différence de largeur de bande existant entre d'un part un matériau antireflet à « large bande » et d'autre part un matériau antireflet à « bande étroite » est généralement d'environ 50% ou plus.

Le matériau antireflet peut également comprendre, sur la couche à faible indice de réfraction, une couche antiabrasive, réalisée de préférence selon l'invention à base d'un fluoro-organosilane (silane fluoré).

Il est d'autre part à noter que dans le cas d'une application sur support organique, il faut veiller à utiliser soit une matière peu déformable c'est-à-dire à faible coefficient de dilatation thermique, soit un support plastique préalablement revêtu d'un vernis, de préférence un vernis organosilane adéquat permettant une densification ou réticulation de la couche à base de tantale sans induire de contraintes (stress).

La structure de ce matériau « à trois couches » a été optimisée de manière à obtenir une réponse optique de transmission maximale dans un large domaine spectral, c'est-à-dire par exemple avec un $\Delta\lambda$ de 300 nm et centré à 550 nm.

La formule d'indices de réfraction retenue pour répondre à ce critère est donc - en partant du substrat- : indice moyen/indice élevé/faible indice. On réduit ainsi la réflexion spéculaire des substrats traités par exemple jusqu'à moins de 1% entre 400 et 750nm et par exemple à moins de 0,8% à 580 nm.

La présence, en outre, d'une couche antiabrasive selon l'invention à base de préférence de silane fluoré, permet de conserver les propriétés antireflets tout en augmentant significativement la résistance à l'abrasion.

En outre, la couche de silane fluoré procure au dépôt un caractère antiadhésif et hydrophobe particulièrement intéressant puisqu'il facilite le nettoyage de la surface traitée.

Les couches antireflets ainsi préparées sont homogènes et exemptes de craquelures et/ou de plans de clivage internes. En conséquence, le film antireflet obtenu est suffisamment élastique pour tolérer de faibles torsions ou déformations, lorsqu'appliqué sur un substrat plastique. De plus, ce film résiste à une atmosphère de chaleur humide et saline et révèle une bonne durée de vie, même après plusieurs immersions successives dans l'eau bouillante salée (supérieure ou égale à 10).

Lorsqu'il est appliqué sur un substrat vitreux le revêtement antireflet large bande selon l'invention par exemple avec une largeur de bande de 300 nm, centré à 550 nm, préparé par procédé sol-gel présente des propriétés de résistance mécanique remarquables et peut donc être mis en oeuvre dans le cadre d'une utilisation grand public telle que l'application aux écrans à tube cathodique pour télévisions.

Généralement le matériau antireflet selon l'invention remplit en effet de manière surprenante l'ensemble des exigences requises pour une telle utilisation à savoir:

- une réflexion spéculaire inférieure à 0,8% à 580 nm.
- une réflexion inférieure à 1% entre 450 et 750 nm sur toute la largeur spectrale.
- une dépendance angulaire de la réflexion minimale.
- une tenue mécanique définie par une résistance à l'abrasion sévère selon la norme US-MIL-C-0675-C caractérisée par une absence de dommages après 40 passages.
- une tenue chimique caractérisée par une résistance aux produits d'entretien courants, aux acides, bases et aux solvants organiques (éthanol, acétone, etc...).

En outre comme on le verra plus loin, le procédé de préparation du matériau antireflet selon l'invention n'impliquant pas notamment de températures élevées est simple et peu onéreux.

L'invention concerne également un matériau réfléchissant, caractérisé en ce qu'il comprend un substrat organique ou inorganique, recouvert d'au moins une séquence de deux couches comprenant:

- une couche à faible indice de réfraction analogue à celle déjà citée plus haut, formée par exemple de colloïdes d'oxyde de silicium, de fluorure de calcium ou de fluorure de magnésium enrobés ou non d'un liant siloxane ou d'oxyde de silicium ou d'oxyde de magnésium sous forme polymérique ; et
- une couche polymérique à base d'oxyde de tantale à indice de réfraction élevé et mécaniquement résistant à

l'abrasion précédemment décrit ;

- éventuellement une couche antiabrasive.

Le matériau réfléchissant obtenu est un miroir diélectrique passif mono ou polychroïque, réfléchissant des longueurs d'onde allant du proche ultraviolet au proche infrarouge.

Le matériau à base d'oxyde de tantale et à indice de réfraction élevé est particulièrement adapté pour la réalisation de miroirs interférentiels multicouches. En effet, pour obtenir une réflectivité donnée, le nombre de couches nécessaire est fonction du rapport des indices de réfraction (dans le cas d'un empilement réfléchissant en couches quart d'onde à 2 indices de réfraction).

Lors du dépôt alterné d'une couche à faible indice de réfraction (indice bas:$n_B$) et d'une couche à indice de réfraction élevé (indice haut:$n_H$), le nombre de couches requis sera d'autant plus faible que le rapport ($n_H/n_B$) sera grand. D'autre part, la largeur spectrale est également fonction de la différence entre les deux indices de réfraction.

Grâce à l'emploi du matériau à base d'oxyde de tantale et à indice de réfraction élevé selon l'invention, le nombre de couches nécessaire à l'obtention d'une réflectivité donnée est diminué par exemple d'un facteur 1,5 à 2 par rapport à l'utilisation d'un indice de réfraction moyen. Ceci permet de réduire la durée de fabrication ainsi que les risques de contamination tandis que le procédé de fabrication du miroir multicouches peut se dérouler à température ambiante ou à température modérée, inférieure ou égale, par exemple à 150°C.

Le matériau réfléchissant peut également comprendre un substrat recouvert d'au moins une couche à faible indice de réfraction déjà décrite plus haut, et d'au moins une couche à indice de réfraction « moyen » analogue à celle déjà décrite plus haut pour le matériau antireflet, formée de préférence, selon l'invention d'un matériau à base d'oxyde de tantale et d'un autre oxyde de métal ou de métalloïde, de préférence l'oxyde de silicium ou l'oxyde de magnésium.

Le matériau obtenu pourra alors plutôt être qualifié de « matériau semi-réfléchissant ».

De même en inversant l'ordre des couches des matériaux antireflet décrits plus haut on obtient également des matériaux réfléchissants ou semi-réfléchissants.

L'invention sera mieux comprise à la lecture de la description suivante d'un mode de réalisation de l'invention, donné à titre d'exemple illustratif et non limitatif. Cette description est faite en faisant référence aux dessins joints dans lesquels:

- la figure 1 illustre les différentes étapes de fabrication du matériau précité,
- la figure 2 est une vue en coupe du matériau antireflet selon l'invention,
- la figure 3 est un graphique représentant la valeur de la transmission (T), en fonction de la longueur d'ondes (λ) en nm pour un substrat en silice nu et pour un matériau antireflet selon l'invention,
- la figure 4 est une vue en coupe du matériau réfléchissant selon l'invention.

Les figures 1a à 1c illustrent le procédé de fabrication et de dépôt du matériau polymérique à base d'oxyde de tantale , notamment à indice de réfraction élevé et mécaniquement résistant à l'abrasion selon l'invention.

La première étape du procédé consiste à synthétiser une solution dans un solvant contenant un composé-précurseur moléculaire de tantale susceptible de former un film polymérique homogène d'oxy-hydroxyde de tantale lors du dépôt par réaction d'hydrolyse-condensation avec la vapeur d'eau contenue dans l'air.

Cette solution 1 est obtenue selon l'invention par dissolution d'un sel de tantale anhydre de préférence, un pentahalogénure de tantale $TaX_5$ (avec X=F,Br, Cl ou I). De préférence encore la solution 1 est obtenue par dissolution du pentachlorure de tantale $TaCl_5$ dans un solvant 3.

Ce solvant 3 est de préférence choisi parmi les alcools aliphatiques saturés de formule ROH où R représente un groupe alkyle par exemple de 1 à 5 atomes de carbone de préférence encore, le solvant est de l'éthanol absolu.

Ce mélange donne lieu à la formation, dans le cas par exemple ou l'halogène est le chlore, d'un chloroalcoxyde de tantale, selon l'équilibre suivant, comme cela est décrit par Pascal P., dans le Nouveau traité de chimie Minérale, Masson Ed. Paris, Tome XII (1959), p.576:

$$TaCl_5 + xROH \leftrightarrow TaCl_{5-x}(OR)_x + xHCl$$

Par exemple, x=3, c'est à dire que l'on a alors l'équilibre suivant:

$$TaCl_5 + 3EtOH \leftrightarrow TaCl_2(OEt)_3 + 3HCl$$

La réaction est légèrement exothermique (élévation de la température jusqu'à environ 50°C). La solution 1 obtenue après refroidissement et filtration est limpide, transparente et très acide.

Le procédé de la présente demande se distingue ainsi fondamentalement de l'art antérieur où l'on utilise comme précurseur un alcoxyde de métal tel qu'un alcoxyde de tantale par exemple le pentaéthoxyde de tantale Ta $(OEt)_5$ hydrolysé en milieu acide HCl ou $CH_3COOH$. De telles solutions gélifient relativement rapidement, en l'espace de 2 à 3 jours environ, et leur stabilité est donc nettement réduite par rapport aux solutions de chloroalcoxyde selon l'invention.

De plus, les solutions d'alcoxydes nécessitent obligatoirement un agent complexant et sont d'autre part d'un coût beaucoup plus élevé que les solutions préparées par exemple à partir de $TaCl_5$ qui est un produit facilement disponible et d'un prix relativement bas.

La solution 1, par exemple de chloroalcoxyde de tantale dans l'éthanol encore appelée solution $TaCl_5$/EtOH dans la suite de la description a généralement une concentration de 1 à 20% exprimée en équivalent massique $Ta_2O_5$. Cette solution est sensible à l'humidité de l'air. Si on y ajoute de l'eau par exemple dans un rapport molaire $H_2O$/Ta de 10 il se forme rapidement un gel, de ce fait, une telle solution doit être conservée de préférence à l'abri de l'humidité ambiante.

Bien qu'une telle solution puisse être utilisée de manière tout à fait satisfaisante, et soit nettement supérieure pour les raisons déjà indiquées plus haut, aux solutions d'alcoxydes utilisées jusqu'alors, l'excès de HCl présent dans le mélange entraîne cependant deux inconvénients.

Tout d'abord, les vapeurs acides provenant de la solution sont corrosives vis-à-vis des objets métalliques environnants. Ensuite, le traitement thermique de réticulation réalisé de préférence, selon l'invention à basse température, inférieure ou égale par exemple à 150°C ne permet pas d'éliminer de la couche déposée les ions halogénure tels que chlorures excédentaires, qui rendent la surface du revêtement relativement non-mouillante et empêchent une bonne adhésion du dépôt suivant.

De préférence, on cherche à éliminer les ions halogénure en particulier les ions chlorure en excès dans la solution ou tout au moins on en limite l'excès par rapport au précurseur métallique.

L'élimination de l'excès, par exemple d'acide chlorhydrique (si X = Cl), peut se faire par évaporation c'est-à-dire que l'on élimine du mélange $TaCl_5$, l'excès d'acide chlorhydrique et l'éthanol par évaporation sous pression réduite, par exemple $10^{-2}$ mbar. On obtient un solide blanc correspondant à du $TaCl_2(OEt)_3$, le résidu est ensuite partiellement redissous dans l'éthanol pour donner une solution par exemple de 5 à 10%, de préférence à 7 % en équivalent massique $Ta_2O_5$. La dissolution est totale après par exemple un reflux de 4 heures à 80°C. Après filtration du mélange, on obtient une solution limpide et transparente de pH voisin de 2.

Dans la suite de la description, on appellera cette solution $TaCl_2(OEt)_3$/EtOH.

Il est bien évident que ce qui vient d'être décrit pour X=Cl et R=Et peut être généralisé pour tout X et tout groupe R cités plus haut.

La sensibilité de cette solution à l'humidité est proche de celle de la solution $TaCl_5$/EtOH.

La seconde méthode pour éliminer les ions chlorure en excès consiste à les neutraliser, par exemple à les faire précipiter sous forme de chlorure d'ammonium ($NH_4Cl$) en faisant buller de l'ammoniac gazeux anhydre ($NH_3$) dans le mélange $TaCl_5$/EtOH par exemple de 5 à 10% en équivalent massique $Ta_2O_5$. On constate la formation d'un précipité blanc correspondant au chlorure d'ammonium, peu soluble en milieu alcoolique.

La réaction mise en jeu est la suivante:

$$TaCl_2(OEt)_3 + HCl + NH_3 \rightarrow TaCl_2(OEt)_3 + NH_4Cl$$

Après filtration du mélange, on obtient une solution limpide de pH environ 6-7 mesuré en milieu éthanolique.

Dans la suite de la description, on nommera cette solution $TaCl_2(OEt)_3$/EtOH-$NH_3$.

De nouveau, il est bien évident que ce qui vient d'être décrit pour X=Cl et R=Et peut être généralisé pour tout X et tout groupe R cités plus haut.

Cette solution est peu sensible à l'humidité de l'air, mais si on y ajoute de l'eau par exemple dans un rapport molaire $H_2O$/Ta voisin de 10, il se forme très rapidement un gel.

Une troisième voie consiste à diminuer la proportion d'ions chlorures (ou halogénures) par rapport au précurseur métallique précurseur dans la solution, en y ajoutant un autre composé métallique ou de métalloïde ne contenant pas d'ions chlorures, tout en gardant les propriétés optiques et mécaniques du matériau après dépôt, et traitement de réticulation thermique ou autre.

L'oxyde de titane apparaît comme un excellent candidat en dépit de sa tenue mécanique modérée après traitement thermique par exemple à 150°C mais on peut l'utiliser en formulation, l'oxyde de tantale assurant les propriétés de résistance à l'abrasion du matériau.

On peut utiliser de 1 à 99 % par exemple de 10 à 90% en masse exprimée en oxyde du composé précurseur métallique ne contenant pas d'ions chlorure et donnant ensuite par exemple l'oxyde de titane, mais de préférence la formulation retenue, permettant d'obtenir des couches répondant aux spécifications de résistance à l'abrasion et d'indice de réfraction, correspond à une proportion finale inférieure ou égale à 50% en masse exprimée en oxyde de titane.

Pour obtenir un tel système, on additionne à la solution $TaCl_5$/EtOH du tétra-isopropoxyde de titane $(Ti(iOPr))_4$ en tant que précurseur mais on pourrait aussi utiliser un autre alcoxyde de Titane ou bien un autre composé précurseur de l'oxyde de titane, après filtration du mélange, on obtient une solution (2) limpide et transparente de pH<2.

Dans la suite de la description, on appellera cette solution par exemple $TaCl_5$-$Ti(iOPr)_4$/EtOH.

Il est également possible comme déjà mentionné plus haut de préparer des solutions de tantale (1) en utilisant différents sels métalliques $TaX_5$ avec X = F, Br, I outre Cl dissous dans l'éthanol par exemple à une concentration de 5% à 10% en équivalent en masse de $Ta_2O_5$ afin d'obtenir des solutions traitantes moins acides et d'éliminer les problèmes de mouillabilité de la couche déposée liés essentiellement à la présence des chlorures.

Dans tous les cas la proportion de composé, précurseur moléculaire de tantale est de préférence de 5 à 10% en équivalent en masse d'oxyde de tantale, dans le solvant, tel que le solvant alcoolique.

Plus généralement, on peut mélanger à la solution (solution 1) dans un solvant - une solution dans un solvant de même nature comprenant un composé de métal ou de métalloïde autre que le tantale, ce composé précurseur donnant ensuite un composé à base d'oxyde de métal ou de métalloïde l'addition se faisant, dans une proportion allant de 100 à 0 · % (de préférence de 1 à 99%, de préférence encore de 10 à 90%) en équivalent d'oxyde de métal ou de métalloïde pour 0 à 100% en équivalent d'oxyde de tantale.

Le métal ou métalloïde autre que le tantale est choisi de préférence parmi le titane (voir plus haut), l'yttrium, le scandium, le zirconium, le hafnium, le thorium, le niobium, le lanthane, ou l'aluminium si l'on souhaite obtenir un indice plutôt élevé et parmi le silicium et le magnésium, si l'on souhaite obtenir un indice plutôt moyen ou faible.

Le composé précurseur de métal ou de métalloïde peut être choisi parmi tout composé adéquate, tel qu'un alcoxyde ou autre.

On peut également ajouter le composé de métal ou de métalloïde autre que le tantale directement dans la solution de composé moléculaire à base de tantale pour obtenir la concentration voulue.

On pourra également mélanger plusieurs solutions composant plusieurs composés de métal ou de métalloïde autres que le tantale avec la solution (1) ou ajouter plusieurs composés de métal ou de métalloïde autres que le tantale directement dans la solution (1).

On obtient dans l'un ou l'autre cas une solution (2) de précurseurs moléculaires ayant par exemple une concentration de 5 à 10% en équivalent en masse d'oxydes métalliques les proportions en équivalent oxyde métallique/oxyde de tantale variant de 0/100 à 100/0.

Comme illustré sur la figure 1b, la solution contenant le précurseur moléculaire de tantale, ainsi obtenue (solution 1 ou 2), est déposée sur un support 7 pour donner une couche polymérique d'oxy-hydroxyde de tantale référencée 9.

On désigne par le terme général « support 7 » tout substrat organique ou inorganique, tels que ceux qui seront décrits ultérieurement ou toute couche active ou favorisant l'adhérence, déposée sur ledit substrat.

Généralement, le substrat est un substrat plan ou un substrat présentant une faible courbure par exemple la surface d'un écran à tube cathodique pour téléviseur ou un verre de lunettes, mais le procédé selon l'invention permet de revêtir tout substrat quelle que soit sa forme.

Le dépôt de la couche 9 est effectué par exemple par trempage-retrait (« Dip coating » en anglais), par enduction centrifuge (« Spin coating » en anglais) par enduction laminaire (« Laminar Flow coating » en anglais), à l'aide d'un couteau horizontal (« Tape casting » en anglais) ou par tout autre procédé permettant d'obtenir un dépôt uniforme et une couche homogène en épaisseur.

Enfin, la figure 1c illustre la troisième étape du procédé consistant à réaliser une réticulation ou densification par exemple un traitement thermique ou un insolation UV, de la couche 9.

Ces traitements, thermique ou insolation, sont respectivement référencés 11 et 13.

Le traitement 11 est réalisé par exemple dans une étuve ou sous une lampe infrarouge par exemple à une température de 100 à 200°C de préférence 120 à 200°C, de préférence encore 150°C pendant 2 à 150 minutes de préférence 15 à 60 minutes, par exemple à 150°C durant 30 minutes.

Le traitement 13 est réalisé sous une lampe UV par exemple une lampe à vapeur de mercure ou lampe excimère, émettant de préférence dans le domaine des UV-B et UV-C c'est-à-dire 180 à 280 nm de longueur d'onde.

La dose d'UV reçue par la couche doit être suffisante pour induire une réticulation. La durée de l'exposition aux UV est fonction de la puissance d'émission de la lampe dans le domaine de longueurs d'ondes précité.

Ladite insolation aux rayons ultraviolets est généralement réalisée avec une énergie de 5 à 10 $J/cm^2$, de préférence de 5 à 6 $J/cm^2$, pendant une durée de 10 secondes à 10 minutes, de préférence de 30 sec. à 5 minutes, par exemple de 1 minute, soit typiquement une puissance de 350 $mW/cm^2$.

Généralement l'étape de réticulation par les UV est suivie par une étape de recuit ou de post-traitement thermique à une température par exemple de 80 à 200°C de préférence 100 à 150°C pendant 10 à 60 minutes de préférence 15 à 30 minutes.

La réticulation peut également être effectuée par tout procédé connu de l'homme du métier dans ce domaine

de la technique et permettant de réticuler, densifier le polymère inorganique selon l'invention tel qu'irradiation par un faisceau laser ou encore par un faisceau d'électrons ou d'ions ou une énergie micro-onde.

La densification par insolation par les ultraviolets améliore l'état de surface du film et donne des couches beaucoup plus mouillables en particulier juste après insolation.

Le traitement de densification-réticulation par insolation par les ultraviolets présente en outre l'avantage important, voire décisif, d'une durée nettement plus courte que le traitement thermique et ce même s'il doit être suivi d'une étape dite de recuit thermique qui améliore généralement significativement la densification de la couche de $Ta_2O_5$.

A titre d'exemple, on effectue selon l'invention une insolation sous les UV d'une durée de quelques minutes au maximum, de préférence égale ou inférieure à 5 minutes au lieu de 30 minutes en général pour une réticulation-densification par traitement thermique à 150°C.

D'autre part le traitement de densification-réticulation par les UV est plus facile à mettre en oeuvre, nécessite moins de matériels, et évite les délais de montée et descente en température.

La troisième étape du procédé qui consiste par exemple en ces deux traitements 11 et 13, permet de réticuler le réseau polymérique d'oxy-hydroxyde de tantale et ainsi de densifier la couche. Ce traitement entraîne une meilleure tenue mécanique du film et une augmentation de l'indice de réfraction par rapport à une couche équivalente n'ayant pas subit un tel traitement.

Ainsi, de manière inattendue le procédé selon l'invention cumule les avantages des deux familles de procédé sol-gel sans en présenter les inconvénients, en ce sens que d'une part comme les systèmes colloïdaux, il peut être mis en oeuvre à température modérée mais en donnant des revêtements résistants et que, d'autre part, contrairement aux systèmes sol-gel polymériques une telle résistance est obtenue à faible température.

Selon l'invention, et du fait que le matériau polymérique comporte généralement des ions chlorures (halogénures) résiduels, une densification par insolation aux UV permet d'améliorer la mouillabilité de couches à base de ce matériau.

Le matériau polymérique ainsi préparé, dans le cas d'un matériau polymérique à indice de réfraction élevé, présente précisément un indice de réfraction « élevé » par exemple de 1,86 à 1,95 notamment (1,93 avec la solution 1 notamment 1,86 avec la solution 2).

Selon l'invention, la solution 1 ou 2 peut en outre être aussi mélangée avec une solution compatible contenant un autre précurseur métallique ou de métalloïde de type alcoxyde ou sel métallique dissous par exemple dans un solvant ou des matériaux polymériques ou colloïdaux, permettant ainsi de moduler à volonté l'indice de réfraction de la couche polymérique obtenue après dépôt, tout en conservant les propriétés de tenue mécanique à l'abrasion, le métal ou le métalloïde ainsi apporté étant de préférence différent du ou des métal (métaux) et/ou métalloïde(s) déjà présent(s) dans la solution (1) ou (2) ; ce métal ou métalloïde peut de préférence être choisi parmi les métaux et métalloïdes déjà cités plus haut.

Le tableau 1, ci-dessous, donne à titre d'exemple comparatif les différentes valeurs d'indice de réfraction après densification pour certains des matériaux utilisables dans l'invention, lorsque par exemple la solution 1 ou 2 est mélangée avec à titre de précurseur de $SiO_2$ du tétra-éthoxy-ortho-silicate selon les proportions relatives en équivalent oxyde de tantale et oxyde de silicium.

TABLEAU 1

| PROPORTION EN EQUIVALENT $Ta_2O_5/SiO_2$ | INDICE DE REFRACTION |
|---|---|
| 0/100 | 1,45 |
| 20/80 | 1,46 |
| 51/49 | 1,59 |
| 57/43 | 1,62 |
| 80/20 | 1,73 |
| 85/15 | 1,78 |
| 100/0 | 1,93 |

Il est donc possible de moduler l'indice de réfraction de ce système polymérique à base d'oxyde de tantale et d'oxyde de silicium de façon continue entre 1,45 et 1,93, en faisant varier la proportion des constituants du mélange.

On peut également utiliser pour moduler l'indice de réfraction, tout autre oxyde autre que l'oxyde de silicium dans les proportions citées plus haut, en mettant en oeuvre le précurseur adéquat. On pourra citer ainsi l'oxyde de magnésium.

On peut aussi augmenter l'indice de réfraction de la couche à base d'oxyde de tantale jusqu'à 2,04 après densification en ajoutant une solution contenant un précurseur à base par exemple de titane à la solution 1, tout en conservant de bonnes propriétés de résistance mécanique à l'abrasion. Une telle possibilité a déjà été mentionnée plus haut.

Cependant, il faut réserver l'emploi du composite à base de $TiO_2$ de préférence à des utilisations autres que les lasers de puissance. En effet, cet oxyde possède une absorption intrinsèque de l'énergie lumineuse qui limite et plafonne sa tenue au flux laser à de faibles valeurs. Ce matériau polymérique ($Ta_2O_5/TiO_2$) est par contre idéal pour d'autres applications par exemple dans l'optique intégrée ou pour des lames semi réfléchissantes sur plastique, puisque s'il est associé à de la silice colloïdale, il forme un couple de rapport d'indices de réfraction très élevé par exemple 1,67.

Le matériau optique ou encore présentant des propriétés optiques selon l'invention comprend au moins une couche du matériau polymérique à base d'oxyde de tantale, notamment à indice de réfraction élevé ou moyen et mécaniquement résistant à l'abrasion tel que celui précédemment décrit.

Plusieurs exemples particuliers de réalisation de ces matériaux optiques sont décrits ci-après. Toutefois, l'invention couvre plus largement tous les matériaux optiques comprenant non seulement une couche du matériau polymérique à base d'oxyde de tantale, notamment à indice de réfraction élevé ou moyen et mécaniquement résistant à l'abrasion mais également n'importe quelle combinaison de couches optiques.

En fonction, de la nature des couches optiques, de leur épaisseur et de leur disposition les unes par rapport aux autres, on réalisera des matériaux antireflets ou réfléchissants.

Généralement l'épaisseur des couches, dites « couches minces » est toutefois de 0,1 à 10 µm.

La figure 2 illustre un exemple d'application d'un matériau polymérique à base d'oxyde de tantale, à indice de réfraction élevé, dans la fabrication d'un matériau antireflet à large bande spectrale, présentant de bonnes propriétés hydrophobes et de résistance mécanique à l'abrasion.

Selon les caractéristiques de l'invention, ce matériau comprend successivement :

- un substrat 15 de nature organique ou inorganique, (indice de réfraction $n_s$),
- une couche 17 ou M à indice de réfraction moyen, d'un matériau à base d'oxyde de tantale et d'oxyde de silicium,
- une couche 9 ou H à indice à indice de réfraction élevé $n_H$, composé du matériau polymérique à base d'oxyde de tantale précédemment décrit,
- une couche 19 ou B à faible indice de réfraction $n_B$, formée par exemple de colloïdes d'oxyde de silicium, de fluorure de calcium ou de fluorure de magnésium enrobés d'un liant siloxane ou d'oxyde de silicium sous forme polymérique, et de préférence,
- une couche 21 antiabrasive à base de silane fluoré.

Selon l'invention, les couches minces ci-dessus, sont généralement préparées à partir de systèmes sol-gel polymériques densifiés-réticulés à température modérée, généralement inférieure ou égale à 150°C, et présentent aussi et de manière surprenante une excellente résistance mécanique.

De plus, un tel revêtement multicomposants peut être préparé rapidement et appliqué sur tout substrat, même plastique.

Les couches B,H, et M ont respectivement des indices $n_B$, $n_H$ et $n_M$ avec $n_B<n_M<n_H$. La transmission totale du système dépend de la différence $\Delta n=n_H-n_B$.

Elle sera d'autant plus proche de 100% que $\Delta n$ sera grand. L'indice de la couche M intervient surtout sur la forme et la largeur de la courbe de réflexion.

Les termes indices de réfraction faible, moyen et élevé doivent généralement être interprétés respectivement comme signifiant que l'indice est inférieur à 1,5 environ, compris entre 1,5 et 1,8 environ, et supérieur à 1,8 environ. Tandis que le substrat a par exemple un indice compris entre 1,45 et 1,60 environ.

Dans la suite de la description, le terme « substrat organique » désigne plus précisément un substrat plastique, par exemple l'un de ceux choisis parmi les polyacrylates, les polycarbonates, le polyallylcarbonates et les polyamides. Toutefois, cette liste n'est pas limitative et couvre de façon plus générale les matériaux polymères organiques.

Le terme « substrat inorganique » couvre plus précisément un substrat minéral, c'est-à-dire par exemple les matériaux amorphes ou même cristallins et notamment la silice, les verres borosilicatés ou sodo-calciques, les fluorophosphates et les phosphates.

Comparés aux substrats minéraux, les substrats plastiques sont avant tout moins coûteux, plus facilement modulables, plus légers et moins fragiles aux chocs. Cependant leur utilisation nécessite préférentiellement, la présence d'une couche intercalée entre le substrat organique et la première couche déposée (17 dans ce cas), assurant une bonne comptabilité à cette interface lors de l'étape de densification et en particulier une absorption des contraintes induites. Selon l'invention, on choisit cette couche d'interface, ou vernis, de préférence parmi les polymères organosilanes, chargés éventuellement en colloïdes minéraux.

La couche d'indice de réfraction moyen est, selon l'invention de préférence à base d'oxyde de tantale et de

silicium comme cela a déjà été mentionné plus haut dans le tableau 1.

Une telle couche, permet d'obtenir un réseau chimique présentant une grande continuité et ainsi de créer de fortes interactions entre les couches minces déposées. Les systèmes mixtes, $Ta_2O_5$-$SiO_2$, peuvent donner un indice de réfraction moyen et une bonne tenue mécanique.

Il existe deux possibilités de synthèse pour les systèmes $Ta_2O_5$-$SiO_2$ à partir d'une solution de $TaCl_5$/EtOH : soit par addition d'une solution de silice polymérique préalablement préparée, soit par addition de TEOS c'est à dire de $Si(OEt)_4$, dans ce dernier cas la durée de vie du mélange est accrue.

Dans ces cas les mélanges donnent des solutions limpides. Le précurseur de Tantale peut également être introduit sous la forme de $Ta(OEt)_5$ ou de $TaCl_2(OEt)_3$/EtOH-$NH_3$.

L'indice de réfraction du système d'oxyde $Ta_2O_5$-$SiO_2$ peut comme on l'a déjà indiqué ci-dessus (tableau I) être modulé de 1,45 à 1,93, après le traitement de réticulation tel qu'un traitement de réticulation thermique en faisant varier la proportion de chaque constituant avec, de préférence, le mélange $TaCl_5$-$Si(OEt)_4$/EtOH en tant que précurseur.

Pour les mêmes raisons que pour la couche élaborée avec la solution $TaCl_5$/EtOH, la couche $Ta_2O_5$-$SiO_2$ préparée à partir du mélange $TaCl_5$-$Si(OEt)_4$/EtOH est non mouillante après traitement thermique par exemple à 150°C durant 30 minutes. Cependant, comme cette couche d'indice moyen est recouverte par la couche $Ta_2O_5$, donc de nature chimique très proche, les propriétés de mouillabilité du revêtement de $Ta_2O_5$-$SiO_2$ ont moins ou peu d'incidence sur les interactions entre couches, la continuité du réseau chimique étant assurée.

La couche à indice de réfraction élevée a déjà été décrite en détail plus haut et ne sera donc pas décrite de nouveau de manière détaillée.

La couche à faible indice de réfraction est préparée également selon la technique sol-gel. De façon classique, cette couche est issue d'une suspension monodispersée de colloïdes, d'environ 100 à 200 Å de diamètre, choisis de préférence parmi l'oxyde de silicium, le fluorure de calcium ou le fluorure de magnésium et enrobés dans un liant siloxane polymérique soluble. Les colloïdes et le liant sont synthétisés à partir d'un précurseur moléculaire. Dans l'invention, on préfère utiliser comme précurseur moléculaire de l'oxyde de silicium, le tétraéthylorthosilicate. Toutefois, on peut également utiliser le tétraméthylorthosilicate ou d'autres alcoxydes de silicium. Pour le fluorure de calcium ou le fluorure de magnésium, on utilisera comme précurseurs respectivement l'acétate de calcium et le méthoxyde de magnésium.

De préférence toutefois, cette couche comprend en masse, de 25 à 30 % environ de colloïdes de silice et de 75 à 70 % environ de liant siloxane. Il est également possible d'ajouter à cette couche un tensio-actif non ionique tel qu'un alkylphénoxy-polyéthoxyéthanol. Ceci permet d'accroître la mouillabilité dudit dépôt.

De préférence cependant, la couche de matériau bas indice est formée d'oxyde de silicium ou d'oxyde de magnésium sous forme polymérique (silice polymérique).

La solution traitante utilisée pour l'obtention d'une couche mince de silice polymérique est obtenue de préférence par hydrolyse-condensation du tétraéthyle orthosilicate (TEOS, $Si(OEt)_4$) en milieu acide HCl ou $HNO_3$. Ceci donne lieu à la formation d'espèce oligomérique selon la réaction :

$$Si(OEt)_4 + hH_2O \xrightarrow[EtOH]{H+} SiO_y(OH)_z(OEt)_{4-2y-z} + (2y+z)\,EtOH + (h-y-z)H_2O$$

Cette solution est instable et évolue avec le temps car les réactions d'hydrolyse et de condensation, formatrices du réseau silicaté, sont relativement lente dans le cas du silicium.

Les propriétés optiques, mécaniques et chimiques de la couche mince de silice polymérique dépendent étroitement de ces paramètres physicochimiques.

A titre d'exemple et après optimisation, on obtient les conditions de préparation suivantes :

On prépare une solution mère de silice polymérique en $SiO_2$ de 10,6 % en masse dans l'éthanol c'est à dire que h = 10 et que le pH est d'environ 2.

Après 4 heures d'agitation magnétique et environ 3 à 4 semaines de mûrissement à température ambiante au repos, la solution mère est diluée avec de l'éthanol pur à environ 4 % par exemple à 3,75 % en masse, ce qui permet de ralentir et stabiliser la formation du réseau silicaté. La solution obtenue est limpide et transparente. Elle reste stable durant douze mois au moins, alors que la solution mère gélifie au delà d'un mois.

Les couches minces de silice polymérique ont un indice de réfraction à 550 nm avant et après réticulation, par exemple par cuisson, voisin de 1,40.

Les couches minces de silice polymérique ont d'excellentes propriétés de résistance à l'abrasion et sont résistantes aux solvants organiques usuels : alcools, acétone, aux acides et bases faibles (excepté l'acide fluorhydrique).

La surface de la couche de silice polymérique présente de bonnes propriétés de mouillabilité à l'eau et à

l'éthanol.

Bien que la résistance aux attaques chimiques et mécaniques du revêtement antireflet selon l'invention soit déjà excellente, afin de renforcer les propriétés chimiques et mécaniques de l'empilement antireflet, on utilise selon l'invention un film mince hydrophobe antiabrasif à faible coefficient de friction pour protéger la couche à faible indice de réfraction.

L'emploi d'un agent hydrophobe tel que le Téflon® ne donne pas satisfaction car les interactions entre la couche de protection, et en particulier une couche supérieure en silice polymérique, sont faibles, rendant l'ensemble fragile à l'abrasion. Les composés silanes fluorés présentent l'avantage de former une liaison chimique car ils contiennent des groupements susceptibles de réagir avec les groupements hydroxyles situés à la surface de la couche de silice polymérique, et une chaîne fluorée longue assurant le caractère hydrophobe et le faible coefficient de friction du dépôt.

Parmi les produits existants, on a choisi le $C_6F_{13}CH_2CH_2$-$Si(OEt)_3$ ((Tridécafluoro-1,2,2,2-tétrahydrooctyl)-1-triéthoxysilane), connu sous le nom de T2494 de chez ABCR ou le $C_6F_{13}CH_2CH_2$-$SiCl_3$ ((Tridécafluoro-1,1,2,2-tétrahydro-octyl)-1-trichlorosilane, connu sous le nom de T2492 de chez ABCR.

Ces dérivés ont un faible indice de réfraction, à savoir environ 1,4, et sont solubles dans certains composés perfluorés tels que le GALDEN HT110® de la société MONTEDISON.

Le système silice polymérique - « T2494 » obtenu, est inerte aux acides forts et bases fortes et aux solvants organiques usuels. La couche est parfaitement hydrophobe et très peu mouillable à l'éthanol. Elle résiste au test « sévère » de la norme militaire US-MIL-C-0675C et peut être très facilement nettoyée.

Du fait de sa très faible épaisseur (par exemple quelques nanométres c'est-à-dire une dizaine de nm), la couche d'hydrophobe ne perturbe pas les propriétés optiques de la couche à faible indice, par exemple de la couche de silice polymèrique.

Le procédé de dépôt des couches successives du matériau antireflet va maintenant être décrit dans le cas d'un traitement de réticulation, densification thermique.

De façon avantageuse, mais facultative, on procède tout d'abord à un nettoyage-décapage minutieux du substrat par exemple à l'aide d'une solution d'acide fluorhydrique dilué à 1 %, puis le substrat est rincé abondamment à l'eau désionisée. Il est ensuite dégraissé au savon optique, rincé à nouveau à l'eau distillée et séché à l'éthanol.

Une telle étape de nettoyage a une durée par exemple d'environ 5 minutes.

L'étape suivante consiste à appliquer sur le substrat nettoyé la couche à indice de réfraction moyen, par exemple, à partir d'une solution de précurseur donnant une couche de $Ta_2O_5$-$SiO_2$, en particulier une solution $TaCl_5$-$Si(OEt)_4$/EtOH, par exemple, dans les proportions respectives 80/20 exprimés en oxyde.

Cette couche est appliquée uniformément sur le substrat, par exemple soit par trempage-retrait (dip-coating), soit par enduction centrifuge, à une vitesse de 10 cm/min environ à 1000 t/min. environ, soit par enduction laminaire. Les deux dernières méthodes sont préférables car elles ne nécessitent que très peu de solution traitante. Toutefois, on pourra également utiliser d'autres techniques de dépôt. Ce type de dépôt en solution présente l'avantage de permettre le revêtement de surfaces relativement grandes avec des solutions traitantes très pures et de faible viscosité.

Ce dépôt est suivi éventuellement (c'est-à-dire que cette étape peut être omise) d'une étape de réticulation-densification thermique par cuisson dans les conditions déjà citées plus haut, de préférence à une température de 150°C et pendant une durée de 30 minutes. La cuisson peut être réalisée dans coût appareil adéquat, tel que étuve, etc. et le mode de chauffage peut être tout mode de chauffage convenant à un tel but : par exemple, par infrarouge, etc.

On effectue ensuite un nettoyage, décapage de la même manière que précédemment, puis l'on procède au dépôt de la couche à indice de réfraction élevée qui peut être préparée à partir de l'une quelconque des solutions (1) ou (2) de précurseur de $Ta_2O_3$, déjà décrites plus haut, de préférence avec la solution $TaCl_2(OEt)_3$/EtOH-$NH_3$, puis l'on procède éventuellement à la cuisson (réticulation-densification thermique) de cette couche de la même manière que précédemment.

On procède, de la même façon que cela est décrit plus haut, à un nouveau nettoyage-décapage de la couche déposée, puis on réalise le dépôt de la couche à faible indice de réfraction à partir, par exemple, d'une solution de $SiO_2$ polymérique ou de toute autre solution contenant un précurseur adéquat pour une telle couche à une concentration, de préférence, de 2 à 5 % en oxyde $SiO_2$.

On procède ensuite éventuellement à la cuisson (réticulation-densification thermique) de la couche, par exemple, de silice polymérique, ainsi obtenue dans les mêmes conditions que précédemment.

Puis, on applique, éventuellement, de préférence, par exemple, par pulvérisation, sur la dernière couche faible indice déposée, un agent hydrophobe, de préférence, de type silane fluoré, tel que décrit plus haut, par exemple, le composé « T2494 ». L'agent hydrophobe est généralement dilué dans un solvant perfluoré, tel que le GALDEN HT110® de MONTEDISON à, par exemple, 2 % en masse et appliqué à chaud à une température généralement voisine de 100°C, de préférence, par pulvérisation.

On effectue alors un dernier traitement thermique de cuisson, de préférence, à une température de 150°C et pendant une durée de 15 minutes, suite à quoi, l'excès d'agent hydrophobe, tel que le « T2494 » est éliminé, par

exemple, à l'aide d'un chiffon imprégné d'éthanol.

Le matériau antireflet selon l'invention, préparé par un traitement à basse température, satisfait de manière surprenante à l'ensemble des exigences mentionnées plus haut, liées à ses propriétés optiques, à ses résistances mécaniques et chimiques.

Selon une première variante du procédé selon l'invention, suite au dépôt de la couche à indice de réfraction élevée à base de $Ta_2O_5$, et à la cuisson de la couche, on effectue le nettoyage-décapage de cette couche, comme déjà décrit, puis on laisse s'écouler une certaine durée, par exemple, de 1 à 24 heures, de préférence, 12 heures, avant d'effectuer un second décapage de la couche à base de $Ta_2O_5$ et de déposer la couche à faible indice de réfraction, par exemple, en silice polymérique.

Selon une deuxième variante du procédé selon l'invention, on dépose la couche à indice de réfraction élevée, puis après ce dépôt, on effectue un rinçage de la couche déposée avec un mélange d'ammoniaque (par exemple, à 28 % dans l'eau) et d'éthanol, de préférence à 50/50 en proportion massique, pendant une durée de 1 à 20 minutes, de préférence de 5 minutes, l'éthanol ayant pour rôle d'assurer une meilleure mouillabilité du mélange, on réalise ensuite un traitement thermique à une température de 100 à 200 °C, de préférence de 150°C pendant une durée, par exemple, de 1 à 15 minutes, de préférence 5 minutes sous pression réduite, par exemple, de $10^{-1}$ à $10^{-3}$ mbar, de préférence $10^{-2}$ mbar.

Ce traitement de rinçage, puis de cuisson, est de préférence répété deux à 10 fois, par exemple, deux fois, puis on refait un rinçage $NH_4OH$/éthanol et on effectue enfin la cuisson de la couche à haut indice, le dépôt de la couche de faible indice et les autres étapes, comme décrit plus haut.

Selon une troisième variante du procédé selon l'invention, on procède de manière analogue à la deuxième variante, mais de même que pour la première variante. On laisse s'écouler une certaine durée, par exemple de 1 à 24 heures, de préférence 12 heures, suite au dernier rinçage avec le mélange ammoniaque/éthanol, avant d'effectuer le dépôt de la couche à faible indice et les autres étapes du procédé.

Cette troisième variante du procédé de densification-réticulation de la couche à indice élevée à base de $Ta_2O_5$, à savoir avec un traitement thermique sous pression réduite et rinçage avec un mélange $NH_4OH$/EtOH donne les meilleurs résultats quant à l'adhésion des couches, et aux propriétés mécaniques de tenue à l'abrasion du revêtement antireflet.

Un revêtement préparé avec la troisième variante du procédé va au delà des exigences requises pour une application dite « grand public ».

L'utilisation d'une solution traitante de type $TaCl_2(OEt)_3$/EtOH-$NH_3$ permet, d'autre part, d'obtenir également les meilleurs résultats.

Le procédé de dépôt des couches successives du matériau antireflet va maintenant être décrit dans le cas d'une réticulation-densification par insolation par les ultraviolets.

Le procédé ci-dessus, qui nécessite une étape de densification thermique à température modérée de la couche haut indice, bien que permettant d'obtenir un revêtement antireflet très satisfaisant, résistant en particulier au test « sévère » à l'abrasion de la norme US-MIL-C-0675-C, présente cependant l'inconvénient de demeurer relativement long et de nécessiter de nombreux moyens, tels que étuve sous vide, bac de rinçage, etc., et d'être relativement coûteux en énergie, car impliquant, notamment, quatre traitements thermiques à 150°C.

Comme on l'a déjà mentionné plus haut, la densification, par une insolation aux ultraviolets, permet de donner, en particulier, une couche « haut indice » à base de $Ta_2O_5$ assez bien densifiée, par exemple avec n = 1,83 au lieu de 1,93, en peu de temps, mouillante au sortir de la lampe, tout en entraînant une élévation de température faible, par exemple inférieure à 70° C environ au niveau du substrat.

Une telle densification-réticulation UV, éventuellement associée à un recuit thermique, peut être appliquée également à la couche moyen indice et à la couche faible indice, par exemple, préparée à partir de $SiO_2$ polymérique.

De la même manière que dans le cas d'une réticulation-densification par traitement thermique, on effectue, tout d'abord, un nettoyage-décapage minutieux du substrat, par exemple, à l'aide d'une solution d'acide fluorhydrique à 1 %, puis on rince abondamment à l'eau désionisée.

Le substrat est ensuite dégraissé au savon optique, rincé à nouveau à l'eau distillée et séché à l'éthanol, une telle étape de nettoyage a une durée, par exemple, d'environ 5 minutes.

L'étape suivante consiste à appliquer sur le substrat nettoyé la couche à indice de réfraction moyen, par exemple, à partir d'une solution de précurseur donnant une couche de $Ta_2O_5$-$SiO_2$, en particulier, une solution $TaCl_5$-$Si(OEt)_4$/EtOH, par exemple, dans les proportions 80/20, exprimés en oxyde. Cette couche est appliquée uniformément sur le substrat par une des techniques déjà citées plus haut dans le cadre du procédé de dépôt avec un traitement de réticulation-densification thermique.

On procède ensuite, éventuellement (c'est-à-dire que cette étape peut être omise) à la densification-réticulation de cette couche par insolation aux rayons UV, par exemple aux UV B ou C, de préférence, à une énergie de 5 à 10 J/$cm^2$, de préférence de 5 à 6 J/$cm^2$, pendant une durée, de préférence de 10 sec. à 10 minutes, de préférence encore de 30 sec à 5 minutes, par exemple de 1 minute (soit une puissance de 300 à 350 mW/$cm^2$).

De préférence, on opère à pleine puissance, c'est-à-dire à 350 $mW/cm^2$.

Après refroidissement du substrat qui ne dure que de 1 à 5 minutes , grâce, par exemple, à l'assistance d'un jet d'air sous pression, on dépose la couche haut indice à base de $Ta_2O_5$, qui peut être préparée à partir de l'une quelconque des solutions de précurseur de $Ta_2O_5$ (1, 2), déjà décrites plus haut, puis l'on procède éventuellement à la densification-réticulation de cette couche par insolation aux ultraviolets dans les mêmes conditions que pour la couche à moyen indice.

On réalise ensuite le dépôt de la couche bas indice, par exemple, en $SiO_2$ polymérique, à partir d'une solution traitante adéquate, par exemple, l'une des solutions traitantes déjà mentionnées plus haut, c'est-à-dire une solution éthanolique de silice polymérique obtenue à partir de $Si(OEt)_4$ en milieu HCl ou $HNO_3$, ou encore une solution telle que $[SiO_2]$ = 2,4%, $[H_2O/Si]_{mol}$=12 et pH≈2, en milieu acide nitrique ou acide chlorhydrique et sans insolation aux UV que l'on nomme "silice oligomérique" dont la préparation résulte de la modification du procédé décrit par MAEKAWA S. et OHISHI T., J. Of Non-Crystalline Solids, 169, (1994), p. 207.

On procède ensuite à la densification-réticulation de cette couche par insolation aux UV, mais l'on expose la couche à bas indice de réfraction à une énergie réduite et/ou pendant une durée réduite, par exemple 30 secondes, car les effets des UV sur la densification de cette couche sont plus limités que dans le cas des couches haut indice et moyen indice.

On met à profit l'échauffement de la surface du revêtement pour appliquer à chaud, de la manière déjà décrite, l'agent hydrophobe, tel que le « T2494 ».

L'ensemble du substrat et des trois couches appliquées subit alors un traitement thermique ou traitement de recuit, à une température par exemple de 80 à 200°C, de préférence 100 à 150 °C pendant 10 à 60 minutes de préférence 15 à 30 minutes, par exemple à 150°C durant 30 minutes, afin de pousser jusqu'au bout la densification des trois couches.

Le revêtement antireflet obtenu présente d'excellentes propriétés optiques, mécaniques et de tenue à l'abrasion.

La durée totale du procédé est, par exemple, de une heure environ.

Le procédé selon l'invention de préparation manuelle d'un tel revêtement antireflet avec réticulation-densification par insolation par les ultraviolets est particulièrement bien adapté au traitement d'un substrat organique, par exemple, en plastique ne supportant pas la température élevée des traitements thermiques.

Un tel procédé permet également de réaliser des revêtements antireflets large bande et résistant à l'abrasion, notamment sur des écrans de tube cathodique, remplissant l'ensemble des exigences citées plus haut.

La densification UV permet d'abaisser notablement le temps de fabrication du revêtement tricouche en diminuant le nombre de traitements thermiques, par exemple, à 150°C de 4 à 1, l'inertie thermique du substrat volumineux triplant pratiquement les durées de traitement.

De plus, la densification UV, en rendant mouillable les surfaces juste après insolation, supprime les étapes de nettoyage intermédiaire, assure une bonne interaction entre les couches, et améliore la tenue mécanique à l'abrasion du revêtement, en particulier si la couche de silice polymérique provient de la préparation de type "MAEKAWA" appelée aussi "silice oligomérique".

Enfin, l'échauffement de surface engendré par les UV permet le dépôt à chaud de l'agent hydrophobe avant l'unique traitement thermique final du tricouche et ainsi renforce à peu de frais, la tenue mécanique du revêtement ; cette méthode de densification paraît donc relativement plus simple à mettre en oeuvre de manière industrielle que la série de traitements thermiques précédemment proposée.

La figure 4 illustre un deuxième exemple de matériau optique, à savoir un matériau réfléchissant à large bande spectrale.

Selon les caractéristiques de l'invention, ce matériau comprend un substrat 15 de nature organique ou inorganique, sur lequel est déposé au moins un ensemble (une séquence) de deux couches, dans le cas de la figure 4, deux ensembles de deux couches, à savoir :

- une couche 19 à faible indice de réfraction ; et
- une couche 9 à indice de réfraction élevé.

Le substrat 15 et les couches 19 et 9 sont identiques à ceux décrits dans la réalisation du matériau antireflet.

Le procédé de dépôt des couches successives du matériau réfléchissant va maintenant être décrit en faisant référence à la figure 4.

De façon avantageuse, mais facultative, le substrat de nature organique ou inorganique est d'abord soumis à un nettoyage méticuleux, tel que celui décrit dans la réalisation du matériau antireflet.

On dépose ensuite sur le substrat 15 nettoyé, une première couche 19 à faible indice de réfraction selon l'une des techniques de dépôt en solution déjà citées. Le solvant étant avantageusement choisi parmi les alcools aliphatiques.

On procède alors à la réticulation de cette couche soit par UV, soit par traitement thermique dans les conditions déjà mentionnées pour le revêtement antireflet.

On effectue ensuite un nettoyage-décapage de cette couche, de manière connue, par exemple avec une solution d'HF à 1 %. Ce traitement pouvant être omis si l'on effectue la réticulation-densification par insolation aux UV.

On procède ensuite au dépôt de la couche 9 à indice de réfraction élevé, et l'on effectue de nouveau une densification par UV ou par traitement thermique.

Ensuite, on répète les opérations de dépôts précitées autant de fois que nécessaire pour obtenir la réflectivité voulue.

Dans le cas où la réticulation est réalisée par UV, on soumet de préférence l'ensemble de l'empilement à une cuisson ou recuit thermique dans des conditions analogues à celles mises en oeuvre pour le revêtement antireflet.

On peut encore améliorer la tenue du revêtement en procédant au dépôt d'une couche antiabrasive, hydrophobe, analogue à celle, déjà décrite dans le cas du matériau antireflet ci-dessus, et qui termine l'empilement, cette couche étant appliquée à chaud de la même manière que pour le revêtement antireflet, par exemple par pulvérisation.

On donne ci-après des exemples de réalisation de matériaux selon l'invention ou de mise en oeuvre du procédé selon l'invention.

Les opérations de dépôt sont réalisées dans un environnement propre de classe 100 préférentiellement (norme US) et sous flux laminaire.

EXEMPLE 1 : Réalisation de couches minces à base d'oxyde de tantale avec réticulation par traitement thermique.

Le substrat de silice de 5 cm de diamètre (d'indice de réfraction 1,45) est tout d'abord nettoyé à l'aide d'une solution d'acide fluorhydrique 1%, puis rincé abondamment à l'eau.

Il est ensuite dégraissé au savon optique végétal (« Green soap »), rincé à nouveau à l'eau distillée et séché à l'éthanol.

Juste avant le dépôt, le substrat subit un « drag-wipe » afin d'éliminer les poussières et les dernières traces provenant de l'evaporation de l'alcool.

Précisons que l'opération d'essuyage connue sous le terme anglais d'essuyage de type « Drag-wipe » consiste à passer sur la surface à traiter, un papier optique partiellement imbibé d'éthanol sur sa partie frontale, mais sec sur sa partie postérieure, de manière à humidifier la face, en premier, et à la sécher immédiatement.

Les dépôts ont été réalisés par centrifugation avec environ 1,5 ml de solution traitante. La durée moyenne de l'épandage est de l'ordre de 3 à 4 secondes. La vitesse de rotation du substrat est comprise entre 1 000 et 2 000 tours $min^{-1}$ selon la concentration en tantale dans la solution et le type de précurseur utilisé. Après deux minutes de séchage à 25°C, on obtient une couche de tantale homogène.

a) Influence du traitement thermique.

Les résultats relatifs à l'influence de la température et de la durée de cuisson proviennent de dépôts réalisés avec une solution $TaCl_5$/EtOH à une concentration de 7% en équivalent massique $Ta_2O_5$.

La vitesse de rotation du substrat est fixée à 1 750 tours $min^{-1}$. Après deux minutes de séchage à 25°C, la couche déposée a un indice de 1,63 et une épaisseur de 131 nm. La réflexion maximale se situe à 850 nm (pic quart d'onde). La valeur maximale de *n* est égale à 1,95 à 150°C.

b) Influence du précurseur de tantale.

L'indice de réfraction *n* (à 550 nm) et le coefficient de rétreint $\Delta e$ des couches minces obtenues avec les différentes solutions traitantes décrites plus haut; à savoir: $TaCl_5$/EtOH, $TaCl_2(OEt)_3$/EtOH, $TaCl_2(OEt)_3$/EtOH-$NH_3$ et $TaCl_5$-$Ti(OPr^i)_4$/EtOH(50/50) après traitement thermique à 150°C durant 30 minutes sont donnés dans le tableau II

TABLEAU II

| *Indice de réfraction n à 550 nm et coefficient de rétreint* | | | |
|---|---|---|---|
| Solution traitante | Indice de réfraction (à 550 nm) | | Coefficient de rétreint $\Delta$e |
| | Avant cuisson | Après cuisson | |
| $TaCl_5$/EtOH | 1,63 | 1,93 | 52% |
| $TaCl_2(OEt)_3$/EtOH | 1,61 | 1,93 | 52% |
| $TaCl_2(OEt)_3$/EtOH-$NH_3$ | 1,59 | 1,86 | 56% |

TABLEAU II (suite)

| Indice de réfraction n à 550 nm et coefficient de rétreint | | | |
|---|---|---|---|
| Solution traitante | Indice de réfraction (à 550 nm) | | Coefficient de rétreint $\Delta e$ |
| | Avant cuisson | Après cuisson | |
| $TaCl_5$-$Ti(OiPr^i)_4$/EtQH (50/50) | 1,67 | 2,01 | 45% |

c) Propriétés mécaniques et chimiques des couches et état de surface.

D'un point de vue des propriétés chimiques et mécaniques, les couches selon l'invention à base de $Ta_2O_5$ après traitement thermique sont remarquables quelque soit le type de précurseur moléculaire utilisé. En effet, elles sont extrêmement dures à l'abrasion et résistent ainsi au test « sévère » de la norme militaire US MIL-C-0675C c'est-à-dire 20 aller-retour avec une pression de $2^{1/2}$lb.sans dommage.
Par ailleurs, elles ne sont pas altérées par les produits chimiques suivants:

- les solvants organiques (alcools, acétone...)
- les acides forts (HCl 12 M, HF 10%, acide acétique pur...).
- les bases fortes (NaOH 5 M, solution ammoniacale à 28%, TMAOH 1 M,...)

EXEMPLE 2: Réalisation de couches minces dans le système d'oxyde binaire $Ta_2O_5$-$SiO_2$.

On prépare les systèmes $Ta_2O_5$-$SiO_2$ à partir d'une solution de $TaCl_5$/EtOH à 7% en équivalent massique en $Ta_2O_5$ à laquelle on ajoute soit une solution de silice polymérique préalablement préparée (5% en masse dans l'éthanol, hydrolyse acide (HCl) à pH 2, h = concentration en $H_2O$/concentration en Si=8) et âgée de un mois, soit du TEOS (Si $(OEt)_4$). On peut aussi faire varier comme on le souhaite les pourcentages massiques respectifs de $Ta_2O_5$ et de $SiO_2$.
Le substrat de silice de 5 cm de diamètre (d'indice de réfraction 1,45) est tout d'abord nettoyé à l'aide d'une solution d'acide fluorhydrique 1%, puis rincé abondamment à l'eau. Il est ensuite dégraissé au savon optique (« green soap »), rincé à nouveau à l'eau distillée et séché à l'éthanol. Juste avant le dépôt, le substrat subit un « drag-wipe » afin d'éliminer les poussières et les dernières traces provenant de l'évaporation de l'alcool.
Les dépôts ont été réalisés par centrifugation avec environ 1,5 ml de solution traitante. La durée moyenne du dépôt est de l'ordre de 3 à 4 secondes. La vitesse de rotation du substrat est comprise entre 1 000 et 2 000 tours $min^{-1}$ selon la concentration en tantale et en silice dans la solution et le type de précurseur silicé utilisé. Après deux minutes de séchage à 25°C, on obtient une couche homogène à base de tantale et de silice.
Les indices *n*, le coefficient de rétreint $\Delta e$ et le test de résistance à l'abrasion correspondent aux propriétés mesurées après traitement thermique à 150°C durant 30 minutes.
Il apparaît clairement qu'il est possible de moduler l'indice du système oxyde binaire $Ta_2O_5$-$SiO_2$ de 1,46 à 1,93 en faisant varier la proportion de chaque constituant avec le mélange $TaCl_5$-$Si(OEt)_4$/EtOH. D'un point de vue des propriétés mécaniques, on remarque que :

. Il est préférable d'avoir une certaine proportion de $Ta_2O_5$ (de l'ordre de 55 % en masse) pour que la couche de $Ta_2O_5$-$SiO_2$ soit résistante à l'abrasion sévère selon la norme US-MIL-C-675C.
. Le mélange $TaCl_5$-$Si(OEt)_4$/EtOH apparaît être plus stable en durée de vie pour des rapports massiques $Ta_2O_5$/$SiO_2$ > 20/80.

EXEMPLE 3 : Réalisation d'un matériau antireflet avec réticulation par traitement thermique :

Dans cet exemple, on a réalisé un revêtement antireflet tricouche à base d'oxyde de tantale et de silice polymérique qui a été appliqué sur les deux races d'une lame circulaire en silice qui possède un indice moyen de 1,45 dans le visible.
La formulation du film optique tricouche que nous avons choisie est la suivante :

. Une couche de $Ta_2O_5$-$SiO_2$ (80/20) d'indice $n_M$ = 1,73 quart d'onde à 550 nm réalisée à partir d'une solution TEOS-$TaCl_5$/EtOH (e = 79 nm).
. Une couche de $Ta_2O_5$ d'indice $n_H$ = 1,93 quart d'onde à 550 nm obtenue à partir de la solution $TaCl_5$/EtOH (e = 71 nm).
. Une couche de $SiO_2$ polymérique d'indice $n_B$ = 1,42 quart d'onde à 550 nm (e = 97 nm).

. Une couche antiabrasive de protection.

Mode opératoire :

Les dépôts de chaque couche optique sont répétées sur l'autre face du substrat avant la cuisson de celles-ci.
La préparation de chaque couche comprend une séquence nettoyage, dépôt, cuisson à 150°C, d'une durée respective de 5 minutes, 2 minutes et 30 minutes, sauf pour le dépôt de la couche d'agent hydrophobe, antiabrasif, où l'on procède seulement au dépôt et à la cuisson pendant une durée de 15 minutes.
La durée totale du traitement est d'environ 2 heures et 30 minutes.
La couche de $Ta_2O_5$-$SiO_2$ (80/20) a été déposée par enduction centrifuge à une vitesse de rotation de 2 700 tours $min^{-1}$, à partir d'une solution $TaCl_3$-$Si(OEt)_4$/EtOH à 8,5 % en masse de l'équivalent oxyde mixte.
La couche de $Ta_2O_5$ a été réalisée par enduction centrifuge à une vitesse de rotation de 1 100 tours $min^{-1}$ avec une solution $TaCl_5$/EtOH à 7 % en masse d'oxyde.
La couche de $SiO_2$ polymérique a été déposée par enduction centrifuge à une vitesse de rotation de 2 800 tours $min^{-1}$ avec une solution à 3,75 % en masse d'oxyde, âgée de 15 jours.
Chaque couche a subi un traitement thermique de 30 minutes à 150°C. Après chaque cuisson des couches à base de $Ta_2O_5$, le revêtement est décapé avec une solution d'acide fluorhydrique à 1 % dans le but d'éliminer les ions chlorures situés à la surface et de rendre la couche mouillante pour le dépôt suivant.
Après la cuisson de la couche de silice polymérique, l'agent hydrophobe « T2494 », dilué dans le GALDEN HT110® (de MONTEDISON) à 2 % en masse, est déposé sur la lame chaude présentant une température d'environ 100°C, par pulvérisation.
Après traitement thermique à 150°C durant 15 minutes, l'excès de « T2494 » est éliminé à l'aide d'un chiffon imprégné d'éthanol.

Propriété optiques du matériau antireflet préparé conformément à l'exemple 3 ci-dessus :

La figure 3 donne la valeur de la transmission (%), en fonction de la longueur d'onde (λ) pour un substrat en silice nu et pour le matériau antireflet selon l'invention, préparé conformément à l'exemple 3.

Propriétés chimiques et mécaniques du matériau antireflet préparé conformément à l'exemple 3 ci-dessus :

Le revêtement antireflet est inerte aux acides forts, HCl 12 M, HF 1 %, acide acétique pur, aux bases fortes, NaOH 5 M, solution ammoniacale à 28 %, TMAOH 1 M, et aux solvants organiques, alcools, acétone.
Il présente d'excellentes propriétés hydrophobes, puisque l'angle de contact avec une goutte d'eau est supérieur à 90° et qu'il est très peu mouillant à l'éthanol.
Le revêtement antireflet résiste à la gomme de laboratoire et à l'arrachage au ruban adhésif. Il n'est pas endommagé par le test « modéré » de la norme US-MIL-C-0675C, c'est-à-dire 50 passages avec une pression de 1 lb. Par contre, il apparaît des rayures après 10 passages pour le test « sévère » (pression de $2^{1/2}$ lb.) et les observations de microscopie optique montrent un décollement de la couche de silice polymérique.

EXEMPLE 4: Réalisation de couches minces moyen indice dans le système $Ta_2O_5$-$SiO_2$ (80/20) avec une densification par insolation UV.

On prépare une couche moyen indice de $Ta_2O_5$-$SiO_2$ (80/20) en réalisant le dépôt avec une solution $TaCl_5$-$Si(OEt)_4$/EtOH à 8,75% en masse d'oxyde total.
La vitesse de rotation du substrat est fixée à 2 180 tours $min^{-1}$, après deux minutes de séchage, la couche déposée a un indice de 1,545 et une épaisseur de 163 nm. La réflexion maximale se situe à 1 005 nm avant densification (pic quart d'onde). L'évolution de l'indice de réfraction *n* et de l'épaisseur de couche e sont fonction du nombre de passages sous les U.V.
Les valeurs de *n* et de $\Delta e$, atteintes après 75 passages, n=1,64 Δe=31,7%, s'approchent à 90 % environ de celles obtenues après traitement thermique à 150°C durant 30 minutes. Les propriétés de résistance à l'abrasion sont légèrement inférieures : il apparaît de légères frayures à la surface de la couche au test « sévère » de la norme militaire US-MIL-C-0576-C (40 passages).
La grande différence entre les deux méthodes de densification par insolation UV ou par traitement thermique réside dans l'état de surface du film : la densification UV présente l'avantage de donner une couche de $Ta_2O_5$-$SiO_2$ (80/20) parfaitement mouillante immédiatement après insolation, ce qui n'est pas le cas avec le traitement thermique.
Les propriétés de résistance à l'abrasion sont améliorées avec les recuits thermiques et la couche moyen indice $Ta_2O_5$-$SiO_2$ (80/20) passe le test « sévère » de la norme militaire US-MIL-C-0675-C.

EXEMPLE 5 : Réalisation de couches minces haut indice $Ta_2O_5$ avec densification par insolation UV :

On prépare une couche haut indice en $Ta_2O_5$ en réalisant le dépôt avec trois types de solutions traitantes :

- $TaCl_5$/EtOH (7,0 % en masse d'oxyde), $TaCl_2(OEt)_3$/EtOH (à 6,5 %) et $TaCl_2(OEt)_3$/EtOH-$NH_3$ (à 7,6 %).

Les vitesses de rotation du substrat sont respectivement fixées à 1 200, 1 000 et 1 700 tours $min^{-1}$. Après deux minutes de séchage, les couches déposées ont un indice respectif de 1,601, 1,639 et 1,616 et ont chacune une épaisseur de 167, 141 et 163 nm. Les pics de réflexion maximale (pic quart d'onde) se situent respectivement à 1 070, 925 et 1 053 nm avant densification.
Les valeurs de $n$ et de $\Delta e$ atteintes, après insolation UV (350 $mW/cm^2$ environ), à savoir n=1,86 quelle que soit la solution utilisée et $\Delta$e compris entre 44 et 51% sont proches (autour de 90 %) de celles obtenues après traitement thermique à 150°C durant 30 minutes ($\Delta n \approx 0,05$).
Les propriétés de résistance à l'abrasion sont comparables à celles obtenues par densification thermique à 150°C durant 30 minutes, puisque les couches ne sont pas endommagées lors du test « sévère » de la norme militaire US-MIL-C-0675-C et ce, quelque soit le type de solution traitante utilisée.
La grande différence entre ces deux méthodes de densification (par insolation UV ou par traitement thermique) réside, de la même manière que pour la couche moyen indice $Ta_2O_5$-$SiO_2$ (80/20), dans l'état de surface des films : la densification UV présente l'avantage de donner des couches de $Ta_2O_5$ beaucoup plus mouillables qu'avec le traitement thermique. Cet effet des UV ne dépend pas du type de solution traitante utilisée.
Les propriétés de résistance à l'abrasion sont maintenues avec les recuits thermiques et les couches haut indice $Ta_2O_5$ passent le test « sévère » de la norme militaire US-MIL-C-0675-C quelque le soit le type de solution traitante.

EXEMPLE 6 : Réalisation d'empilements, antireflets, tricouches, avec insolation aux UV :

Les solutions traitantes utilisées sont les suivantes : $TaCl_5$-$Si(OEt)_4$/EtOH pour la couche moyen indice, $TaCl_2(OEt)_3$/EtOH-$NH_3$ pour la couche haut indice, $SiO_2$ polymérique HCl, $SiO_2$ polymérique $HNO_3$ ou $SiO_2$ « oligomérique » pour la couche faible indice. On commence par nettoyer minutieusement un substrat d'un diamètre de 80 mm réalisé en verre silicate puis on dépose sur le substrat nettoyé la couche moyen indice $Ta_2O_5$-$SiO_2$ (80/20) et on la densifie sous UV à pleine puissance (c'est-à-dire avec une dose de 350 $mW/cm^2$ ), puis on refroidit le substrat pendant 3 minutes environ avec assistance d'un jet d'air sous pression, et on dépose ensuite la couche fort indice $Ta_2O_5$ et on la densifie sous UV dans les mêmes conditions. On réalise ensuite le dépôt de la couche bas indice $SiO_2$ et on l'insole aux UV avec une irradiation de 300 $mW/cm^2$.
On profite de l'échauffement de la surface du revêtement à environ 80°C pour déposer l'agent hydrophobe à chaud par pulvérisation.
L'ensemble de l'empilement subit un traitement thermique à 150°C durant 30 minutes, afin de parfaire la densification des trois couches. La durée totale du procédé pour une lame de 80 mm de diamètre est d'une heure environ.
On fait également varier la dose d'irradiation UV de chaque couche.
Les meilleurs résultats sont obtenus avec la solution de $SiO_2$ de type oligomérique, avec laquelle le revêtement tricouche, recouvert de l'agent hydrophobe T2494, résiste pratiquement au test à l'abrasion « sévère » de la norme US-MIL-C-0675C qui n'entraîne qu'une légère décoloration de l'antireflet.
En comparaison, les essais avec les couches de $SiO_2$ polymérique en milieu HCl ou $HNO_3$ donne des revêtements légèrement plus fragiles à l'abrasion, les propriétés mécaniques étant comparables avec celles obtenues par le procédé de fabrication faisant appel uniquement aux traitements thermiques comme moyen de densification. Dans le cas de la solution de $SiO_2$ oligomérique, le précurseur, couplé à l'action des U.V. permet d'établir une forte interaction entre la couche de silice et celle haut indice de $Ta_2O_5$, et ainsi garantir une bonne tenue mécanique.
La dose d'insolation UV semble jouer un rôle important puisque quand cet dernière diminue au niveau des couches à bases de $Ta_2O_5$ et de $SiO_2$, la tenue à l'abrasion du revêtement peut être affectée. Par ailleurs, le passage aux U.V. de la couche d'agent hydrophobe T2494 n'améliore pas les propriétés mécaniques du tricouche.

## Revendications

1. Matériau polymérique inorganique, **caractérisé en ce que** ledit matériau est un matériau à base d'oxyde de tantale densifié, ou réticulé, par un traitement thermique à une température inférieure à 200°C, ou par une insolation aux rayons ultraviolets, et **en ce que** ledit matériau comporte en outre des ions halogénure résiduels.

**2.** Matériau polymérique selon la revendication 1, **caractérisé en ce que** ledit matériau comprend un polymère inorganique d'oxy-hydroxyde de tantale densifié ou réticulé.

**3.** Matériau selon la revendication 1, **caractérisé en ce que** lesdits ions halogénure sont des ions chlorure.

**4.** Matériau selon la revendication 1, **caractérisé en ce qu'**il comprend, outre l'oxyde de tantale, au moins un autre oxyde métallique ou de métalloïde choisi parmi l'oxyde de titane, l'oxyde d'yttrium, l'oxyde de scandium, l'oxyde de zirconium, l'oxyde de hafnium, l'oxyde de thorium, l'oxyde de niobium, l'oxyde de lanthane, l'oxyde d'aluminium, l'oxyde de magnésium ou l'oxyde de silicium.

**5.** Matériau selon la revendication 4, **caractérisé en ce que** l'oxyde métallique ou de métalloïde est présent dans une proportion de 1 à 99 % en masse, par rapport à la masse totale des oxydes métalliques ou de métalloïdes.

**6.** Matériau selon l'une quelconque des revendications 1 à 5 **caractérisé en ce que** ledit matériau polymérique inorganique est un matériau à indice de réfraction élevé.

**7.** Procédé de préparation et de dépôt du matériau polymérique inorganique selon la revendication 1, **caractérisé en ce qu'**il comprend les étapes consistant à :

- préparer une solution (1) dans un solvant (3) comprenant un composé moléculaire précurseur à base de tantale choisi parmi les pentahalogénures de tantale $TaX_5$, avec X = F, Br, I ou Cl ;
- mélanger, éventuellement, ladite solution (1) avec une solution dans un solvant de même nature, comprenant un composé de métal ou de métalloïde autre que le tantale, ou ajouter ledit composé de métal ou de métalloïde à ladite solution (1) ; moyennant quoi, on obtient une solution (2) ;
- déposer la solution (1) ou (2) obtenue sur un support pour former une couche uniforme de matériau polymérique ; et
- réticuler, densifier, cette couche polymérique à base d'oxyde de tantale, par un traitement thermique à une température inférieure à 200°C, ou par une insolation aux rayons ultraviolets, éventuellement suivie d'une étape de recuit, ou de post-traitement thermique.

**8.** Procédé selon la revendication 7, **caractérisé en ce que** ledit traitement thermique est réalisé à une température de 100 à moins de 200°C pendant une durée de 2 à 150 minutes.

**9.** Procédé selon la revendication 7, **caractérisé en ce que** ladite insolation aux rayons ultraviolets est réalisé avec une énergie de 5 à 10 $J/cm^2$ pendant une durée de 10 secondes à 10 minutes.

**10.** Procédé selon la revendication 7, **caractérisé en ce que** le solvant est choisi parmi les alcools aliphatiques saturés de formule ROH, où R représente un groupe alkyle de 1 à 5 atomes de carbone.

**11.** Procédé selon la revendication 7, **caractérisé en ce que** l'étape de recuit, ou de post-traitement thermique, est réalisée à une température de 80 à 200°C pendant 10 à 60 minutes.

**12.** Procédé selon la revendication 7 **caractérisé en ce que** les ions halogénures en excès dans la solution (1) sont éliminés de celle-ci.

**13.** Procédé selon la revendication 12 **caractérisé en ce que** les ions halogénures en excès dans la solution (1) sont éliminés par évaporation sous pression réduite, puis redissolution.

**14.** Procédé selon la revendication 12 **caractérisé en ce que** les ions halogénures en excès dans la solution (1) sont éliminés par neutralisation chimique.

**15.** Procédé selon la revendication 7, **caractérisé en ce que** la solution (1) est une solution dans l'éthanol, éventuellement neutralisée par $NH_3$, d'un composé moléculaire précurseur à base de tantale, choisi parmi le pentachlorure de tantale et le chloroéthoxyde de tantale $TaCl_2(OEt)_3$.

**16.** Matériau optique, **caractérisé en ce qu'**il comprend un substrat de nature organique, ou inorganique, recouvert par au moins une couche du matériau polymérique inorganique à base d'oxyde de tantale selon l'une quelconque des revendications 1 à 5.

**17.** Matériau optique, **caractérisé en ce qu'**il comprend un substrat de nature organique, ou inorganique, recouvert par au moins une couche du matériau polymèrique inorganique à base d'oxyde de tantale selon la revendication 6.

**18.** Matériau optique selon la revendication 17, **caractérisé en ce qu'**il comprend, en outre, au moins une couche choisie parmi :

- une couche à faible indice de réfraction à base de colloïdes d'oxyde de silicium, de fluorure de calcium, ou de fluorure de magnésium, enrobés ou non d'un liant siloxane, ou d'oxyde de silicium ou de magnésium sous forme polymérique ;
- une couche à indice de réfraction moyen formée d'un matériau polymérique à base d'oxyde de tantale et d'un autre oxyde de métal ;
- une couche antiabrasive à base de silane fluoré.

**19.** Matériau selon la revendication 18, **caractérisé en ce que** les couches à faible et à moyen indice de réfraction sont des couches polymériques densifiées-réticulées.

**20.** Matériau optiquement actif selon la revendication 18, présentant des propriétés antireflets à large bande spectrale, **caractérisé en ce qu'**il comprend un substrat de nature inorganique, ou organique, recouvert successivement par :

- une couche à indice de réfraction moyen ;
- une couche à indice de réfraction élevé ;
- une couche à faible indice de réfraction ;
- éventuellement, une couche antiabrasive.

**21.** Matériau optique selon la revendication 18, présentant des propriétés antireflets à base spectrale étroite, **caractérisé en ce qu'**il comprend un substrat de nature inorganique, ou organique, recouvert successivement par :

- une couche à indice de réfraction élevé ;
- une couche à faible indice de réfraction ;
- éventuellement, une couche antiabrasive.

**22.** Matériau optique selon la revendication 18, présentant des propriétés réfléchissantes, **caractérisé en ce qu'**il comprend un substrat de nature organique, ou inorganique, recouvert successivement par au moins une séquence de deux couches comprenant :

- une couche à faible indice de réfraction ;
- une couche à indice de réfraction élevé ;
- éventuellement, une couche antiabrasive.

**23.** Matériau optique selon la revendication 18, 20, 21, ou 22 **caractérisé en ce que** le substrat est un substrat organique recouvert d'un vernis.

**24.** Matériau optique selon la revendication 18, 20, 21 ou 22, **caractérisé en ce que** la couche à indice de réfraction moyen est formée d'un matériau polymèrique à base d'oxyde de tantale et d'oxyde de silicium ou d'oxyde de magnésium, les proportions relatives en équivalent oxyde de tantale et oxyde de silicium ou oxyde de magnésium, $Ta_2O_5/SiO_2$ ou $Ta_2O_5/MgO$, pouvant varier de 0/100 à 100/0, moyennant quoi, on module à volonté l'indice de réfraction de la couche polymérique obtenue.

**25.** Matériau optique selon la revendication 18, 20, 21 ou 22, **caractérisé en ce que** la couche à faible indice de réfraction est une couche formée de silice polymérique choisie parmi la silice polymérique préparée en milieu HCl, la silice polymérique préparée en milieu $HNO_3$ et la silice oligomérique.

**26.** Matériau optique selon la revendication 18, 20, 21 ou 22, **caractérisée en ce que** la couche antiabrasive est formée à partir de $C_6F_{13}$ - $CH_2CH_2$ - $Si(OEt)_3$ ou de $C_6F_{13}$ - $CH_2CH_2$ -$SiCl_3$.

**27.** Procédé de préparation d'un matériau antireflet à large bande spectrale selon la revendication 20, **caractérisé en ce qu'**il comprend les étapes suivantes :

- nettoyage-décapage du substrat ;
- dépôt sur le substrat nettoyé de la couche à indice de réfraction moyen ;
- Eventuellement, réticulation-densification thermique de la couche à indice de réfraction moyen déposée ;
- nettoyage-décapage ;
- dépôt de la couche à indice de réfraction élevée à base de $Ta_2O_5$ ;
- Eventuellement, réticulation-densification thermique de la couche à indice de réfraction élevé déposée ;
- nettoyage-décapage, comme précédemment ;
- dépôt de la couche à faible indice de réfraction ;
- Eventuellement, réticulation-densification thermique de la couche à faible indice de réfraction déposée ;
- application de la couche antiabrasive sur la couche à faible indice ;
- traitement thermique.

**28.** Procédé selon la revendication 27, **caractérisé en ce que**, suite au dépôt de la couche à indice de réfraction élevé, à base de $Ta_2O_5$, à la réticulation-densification de cette couche et au nettoyage-décapage de cette couche, on laisse s'écouler une durée de 1 à 24 heures avant d'effectuer un second décapage de la couche à indice de réfraction élevé et de déposer la couche à faible indice de réfraction.

**29.** Procédé selon la revendication 27, **caractérisé en ce que**, suite au dépôt de la couche à indice de réfraction élevé à base de $Ta_2O_5$, on effectue un traitement de rinçage de la couche déposée avec un mélange d'ammoniaque et d'éthanol, on réalise ensuite un traitement thermique sous pression réduite, puis on refait un rinçage avec le mélange ammoniaque/éthanol et on effectue ensuite la réticulation-densification de la couche à indice de réfraction élevé avant de déposer la couche à faible indice de réfraction.

**30.** Procédé selon la revendication 29, **caractérisé en ce qu'**on laisse s'écouler une durée de 1 à 24 heures, suite au dernier rinçage avec le mélange ammoniaque/éthanol, avant d'effectuer le dépôt de la couche à faible indice.

**31.** Procédé de préparation d'un matériau antireflet à large bande spectrale selon la revendication 20, **caractérisé en ce qu'**il comprend les étapes suivantes :

- nettoyage-décapage du substrat ;
- dépôt sur le substrat nettoyé de la couche à indice de réfraction moyen ;
- Eventuellement, densification-réticulation de la couche à indice de réfraction moyen déposée, par insolation aux rayons ultraviolets ;
- dépôt de la couche à indice de réfraction élevé à base de $Ta_2O_5$ ;
- Eventuellement, densification-réticulation de la couche à indice de réfraction élevé déposée, par insolation aux rayons ultraviolets ;
- dépôt de la couche à faible indice de réfraction ;
- densification-réticulation de la couche à faible indice de réfraction déposée, par insolation aux rayons ultraviolets ;
- application de la couche antiabrasive sur la couche à faible indice ;
- traitement thermique de l'ensemble des couches appliquées et du substrat.

**32.** Solution dans un solvant comprenant un composé moléculaire précurseur à base de tantale choisi parmi les pentahalogénures de tantale $Tax_5$, avec x = F, Br, I ou Cl et, éventuellement, un ou plusieurs autre(s) composé(s) de métal ou de métalloïde autre(s) que le tantale.

**33.** Solution selon la revendication 32, dans laquelle ledit solvant est choisi parmi les alcools aliphatiques saturés de formule ROH, où R représente un groupe alkyle de 1 à 5 atomes de carbone.

**34.** Solution selon la revendication 32, dans laquelle le ou lesdit(s) autre(s) composé(s) est(sont) choisi(s) parmi les alcoxydes, halogénures et autres sels de métal ou de métalloïde.

**35.** Solution selon la revendication 32, dans laquelle ledit métal ou métalloïde est choisi parmi le tantale, le titane, le silicium, l'yttrium, le scandium, le zirconium, le hafnium, le thorium, le niobium, le lanthane, l'aluminium et le magnésium.

**36.** Solution selon la revendication 32, dans laquelle la concentration du précurseur à base de tantale et, éventuellement, du ou desdits autre(s) composé(s) de métal, ou de métalloïde est de 1 à 20 %, de préférence, de 5 à 10 %

en équivalent en masse de $Ta_2O_5$ ou d'oxyde de métal ou de métalloïde dans le solvant.

**37.** Solution selon l'une quelconque des revendications 33 à 36, **caractérisée en ce que** les ions halogénures en excès dans la solution sont éliminés de celle-ci.

**38.** Solution selon la revendication 37, **caractérisée en ce que** les ions halogénures en excès dans la solution sont éliminés par évaporation sous pression réduite, puis redissolution.

**39.** Solution selon la revendication 37, **caractérisée en ce que** les ions halogénures en excès dans la solution sont éliminés par neutralisation chimique.

**40.** Solution dans l'éthanol, éventuellement neutralisée par $NH_3$, d'un composé moléculaire précurseur à base de tantale, choisi parmi le pentachlorure de tantale et le chloroéthoxyde de tantale $TaCl_2(OEt)_3$.

**41.** Solution de $TaCl_2(OEt)_3$ dans l'éthanol à une concentration de 5 à 10 % en équivalent massique de $Ta_2O_5$.

**Patentansprüche**

**1.** Anorganisches polymeres Material, **dadurch gekennzeichnet, dass** es sich dabei handelt um ein Material auf Basis von Tantaloxid, das durch eine thermische Behandlung bei einer Temperatur unterhalb 200 °C oder durch Bestrahlung mit ultravioletten Strahlen verdichtet oder vernetzt worden ist, und dass das Material außerdem restliche Halogenidionen enthält.

**2.** Polymeres Material nach Anspruch 1, **dadurch gekennzeichnet, dass** es ein verdichtetes oder vernetztes anorganisches Polymer von Tantaloxyhydroxid ist.

**3.** Material nach Anspruch 1, **dadurch gekennzeichnet, dass** die Halogenidionen Chloridionen sind.

**4.** Material nach Anspruch 1, **dadurch gekennzeichnet, dass** es außer dem Tantaloxid mindestens ein weiteres Metall- oder Metalloidoxid umfasst, ausgewählt aus der Gruppe Titanoxid, Yttriumoxid, Scandiumoxid, Zirkoniumoxid, Hafniumoxid, Thoriumoxid, Nioboxid, Lanthanoxid, Aluminiumoxid, Magnesiumoxid oder Siliciumoxid.

**5.** Material nach Anspruch 4, **dadurch gekennzeichnet, dass** das Metalloder Metalloidoxid in einem Mengenanteil von 1 bis 99 Massenprozent vorliegt, bezogen auf die Gesamtmasse der Metall- oder Metalloidoxide.

**6.** Material nach einem der Ansprüche 1 bis 5, **dadurch gekennzeichnet, dass** das anorganische polymere Material ein Material mit hohem Brechungsindex ist.

**7.** Verfahren zur Herstellung und Abscheidung des anorganischen polymeren Materials nach Anspruch 1, **dadurch gekennzeichnet, dass** es die folgenden Stufen umfasst:

- Herstellung einer Lösung (1) in einem Lösungsmittel (3), die eine Vorläufer-Molekülverbindung auf Basis von Tantal enthält, ausgewählt aus der Gruppe der Tantalpentahalogenide $TaX_5$ mit X = F, Br, I oder Cl;
- gegebenenfalls Vermischen der Lösung (1) mit einer Lösung in einem Lösungsmittel gleicher Art, die eine andere Metall- oder Metalloid-Verbindung als eine Tantal-Verbindung enthält, oder Zugabe der genannten Metall- oder Metalloid-Verbindung zu der Lösung (1) unter Bildung einer Lösung (2);
- Abscheidung der erhaltenen Lösung (1) oder (2) auf einem Träger zur Bildung einer gleichförmigen Schicht aus einem polymeren Material; und
- Vernetzen, Verdichten dieser polymeren Schicht auf Basis von Tantaloxid durch eine thermische Behandlung bei einer Temperatur unter 200 °C oder durch eine Bestrahlung mit ultravioletten Strahlen, woran sich gegebenenfalls ein Glühen oder thermisches Nachbehandeln anschließt.

**8.** Verfahren nach Anspruch 7, **dadurch gekennzeichnet, dass** die thermische Behandlung bei einer Temperatur von 100 bis weniger als 200 °C für eine Zeitdauer von 2 bis 150 min durchgeführt wird.

**9.** Verfahren nach Anspruch 7, **dadurch gekennzeichnet, dass** die Bestrahlung mit ultravioletten Strahlen mit einer Energie von 5 bis 10 $J/cm^2$ für eine Zeitspanne von 10 s bis 10 min durchgeführt wird.

**10.** Verfahren nach Anspruch 7, **dadurch gekennzeichnet, dass** das Lösungsmittel ausgewählt wird aus den gesättigten aliphatischen Alkoholen der Formel ROH, worin R für eine Alkylgruppe mit 1 bis 5 Kohlenstoffatomen steht.

**11.** Verfahren nach Anspruch 7, **dadurch gekennzeichnet, dass** die Glühoder thermische Nachbehandlungsstufe 10 bis 60 min lang bei einer Temperatur von 80 bis 200 °C durchgeführt wird.

**12.** Verfahren nach Anspruch 7, **dadurch gekennzeichnet, dass** die in der Lösung (1) im Überschuss enthaltenen Halogenidionen daraus entfernt werden.

**13.** Verfahren nach Anspruch 12, **dadurch gekennzeichnet, dass** die in der Lösung (1) im Überschuss enthaltenen Halogenidionen durch Eindampfen unter vermindertem Druck und anschließende Wiederauflösung entfernt werden.

**14.** Verfahren nach Anspruch 12, **dadurch gekennzeichnet, dass** die in der Lösung (1) im Überschuss enthaltenen Halogenidionen durch chemische Neutralisation entfernt werden.

**15.** Verfahren nach Anspruch 7, **dadurch gekennzeichnet, dass** die Lösung (1) eine Lösung einer Vorläufer-Molekülverbindung auf Basis von Tantal, ausgewählt aus der Gruppe Tantalpentachlorid und Tantalchloroethoxid $TaCl_2(OEt)_3$, in Ethanol, gegebenenfalls neutralisiert mit $NH_3$, ist.

**16.** Optisches Material, **dadurch gekennzeichnet, dass** es umfasst ein organisches oder anorganisches Substrat, das mit mindestens einer Schicht des anorganischen polymeren Materials auf Basis von Tantaloxid nach einem der Ansprüche 1 bis 5 bedeckt ist.

**17.** Optisches Material, **dadurch gekennzeichnet, dass** es ein organisches oder anorganisches Substrat umfasst, das mit mindestens einer Schicht aus dem anorganischen polymeren Material auf Basis von Tantaloxid nach Anspruch 6 bedeckt ist.

**18.** Optisches Material nach Anspruch 17, **dadurch gekennzeichnet, dass** es außerdem mindestens eine Schicht aufweist, die ausgewählt ist aus der Gruppe:

- eine Schicht mit niedrigem Brechungsindex auf Basis von Kolloiden von Siliciumoxid, Calciumfluorid oder Magnesiumfluorid, die von einem Siloxan-Bindemittel umhüllt sind oder nicht umhüllt sind, oder auf Basis von Siliciumoxid oder Magnesiumoxid in polymerer Form;
- eine Schicht mit mittlerem Brechungsindex, bestehend aus einem polymeren Material auf Basis von Tantaloxid und eines weiteren Metalloxids;
- eine verschleißfeste Schicht auf Basis von Fluorsilan.

**19.** Material nach Anspruch 18, **dadurch gekennzeichnet, dass** die Schichten mit niedrigem Brechungsindex verdichtete, vernetzte Polymerschichten sind.

**20.** Aktives optisches Material nach Anspruch 18, das Antireflexions-Eigenschaften in einem breiten Spektralbereich aufweist, **dadurch gekennzeichnet, dass** es ein anorganisches oder organisches Substrat umfasst, das aufeinanderfolgend beschichtet ist mit:

- einer Schicht mit mittlerem Brechungsindex,
- einer Schicht mit hohem Brechungsindex,
- einer Schicht mit niedrigem Brechungsindex,
- gegebenenfalls einer verschleißfesten Schicht.

**21.** Optisches Material nach Anspruch 18, das Antireflexionseigenschaften in einem engen Spektralbereich aufweist, **dadurch gekennzeichnet, dass** es ein anorganisches oder organisches Substrat umfasst, das aufeinanderfolgend beschichtet ist mit:

- einer Schicht mit hohem Brechungsindex,
- einer Schicht mit niedrigem Brechungsindex,
- gegebenenfalls einer verschleißfesten Schicht.

**22.** Optisches Material nach Anspruch 18, das reflektierende Eigenschaften aufweist, **dadurch gekennzeichnet, dass** es ein organisches oder anorganisches Substrat umfasst, das aufeinanderfolgend beschichtet ist mit mindestens einer Sequenz von zwei Schichten, die umfasst:

- eine Schicht mit niedrigem Brechungsindex,
- eine Schicht mit hohem Brechungsindex,
- gegebenenfalls eine verschleißfeste Schicht.

**23.** Optisches Material nach Anspruch 18, 20, 21 oder 22, **dadurch gekennzeichnet, dass** das Substrat ein organisches Substrat ist, das von einem Firnis (Lack) bedeckt ist.

**24.** Optisches Material nach Anspruch 18, 20, 21 oder 22, **dadurch gekennzeichnet, dass** die Schicht mit mittlerem Brechungsindex hergestellt ist aus einem polymeren Material auf Basis von Tantaloxid und Siliciumoxid oder Magnesiumoxid, wobei die relativen Oxidäquivalent-Verhältnisse zwischen Tantaloxid und Siliciumoxid oder Magnesiumoxid $Ta_2O_5/SiO_2$ oder $Ta_2O_5/MgO$ von 0/100 bis 100/0 variieren können, wodurch der Brechungsindex der erhaltenen polymeren Schicht beliebig moduliert werden kann.

**25.** Optisches Material nach Anspruch 18, 20, 21 oder 22, **dadurch gekennzeichnet, dass** die Schicht mit niedrigem Brechungsindex eine Schicht ist, die hergestellt ist aus polymerem Siliciumdioxid, ausgewählt aus der Gruppe polymeres Siliciumdioxid, hergestellt in einem HCl-Medium, polymeres Siliciumdioxid, hergestellt in einem $HNO_3$-Medium, und oligomeres Siliciumdioxid.

**26.** Optisches Material nach Anspruch 18, 20, 21 oder 22, **dadurch gekennzeichnet, dass** die verschleißfeste Schicht hergestellt ist aus $C_6F_{13}\text{-}CH_2CH_2\text{-}Si(OEt)_3$ oder $C_6F_{13}\text{-}CH_2CH_2\text{-}SiCl_3$.

**27.** Verfahren zur Herstellung eines Antireflexions-Materials in einem breiten Spektralbereich nach Anspruch 20, **dadurch gekennzeichnet, dass** es die folgenden Stufen umfasst:

- Reinigen-Beizen des Substrats;
- Abscheiden einer Schicht mit mittlerem Brechungsindex auf dem gereinigten Substrat,
- gegebenenfalls thermisches Vernetzen-Verdichten der abgeschiedenen Schicht mit mittlerem Brechungsindex,
- Reinigen-Beizen,
- Abscheiden einer Schicht mit hohem Brechungsindex auf Basis von $Ta_2O_5$,
- gegebenenfalls, thermisches Vernetzen-Verdichten der abgeschiedenen Schicht mit hohem Brechungsindex,
- Reinigen-Beizen, wie oben angegeben,
- Abscheiden einer Schicht mit niedrigem Brechungsindex,
- gegebenenfalls thermisches Vernetzen-Verdichten der abgeschiedenen Schicht mit niedrigem Brechungsindex,
- Aufbringen der verschleißfesten Schicht auf die Schicht mit niedrigem Brechungsindex,
- thermisches Behandeln.

**28.** Verfahren nach Anspruch 27, **dadurch gekennzeichnet, dass** man nach der Abscheidung der Schicht mit hohem Brechungsindex auf Basis von $Ta_2O_5$, nach der Vernetzung-Verdichtung dieser Schicht und nach der Reinigung-Beizung dieser Schicht 1 bis 24 Stunden verstreichen lässt, bevor man eine zweite Beizung der Schicht mit hohem Brechungsindex durchführt und die Schicht mit niedrigem Brechungsindex darauf abscheidet.

**29.** Verfahren nach Anspruch 27, **dadurch gekennzeichnet, dass** man nach der Abscheidung der Schicht mit hohem Brechungsindex auf Basis von $Ta_2O_5$ eine Spülung der abgeschiedenen Schicht mit einer Mischung aus Ammoniak und Ethanol durchführt, anschließend eine thermische Behandlung unter vermindertem Druck durchführt, dann erneut mit der Ammoniak/Ethanol-Mischung spült und danach eine Vernetzung-Verdichtung der Schicht mit hohem Brechungsindex durchführt, bevor die Schicht mit niedrigem Brechungsindex darauf abgeschieden wird.

**30.** Verfahren nach Anspruch 29, **dadurch gekennzeichnet, dass** man nach dem letzten Spülen mit der Ammoniak/ Ethanol-Mischung 1 bis 24 Stunden verstreichen lässt, bevor man die Abscheidung der Schicht mit niedrigem Brechungsindex durchführt.

**31.** Verfahren zur Herstellung eines Antireflexions-Materials in einem breiten Spektralbereich nach Anspruch 20, **da-**

**durch gekennzeichnet, dass** es die folgenden Stufen umfasst:

- Reinigen-Beizen des Substrats;
- Abscheidung der Schicht mit mittlerem Brechungsindex auf dem gereinigten Substrat,
- gegebenenfalls Verdichten-Vernetzen der abgeschiedenen Schicht mit mittlerem Brechungsindex durch Bestrahlung mit ultravioletten Strahlen,
- Abscheidung der Schicht mit hohem Brechungsindex auf Basis von $Ta_2O_5$,
- gegebenenfalls Verdichten-Vernetzen der abgeschiedenen Schicht mit hohem Brechungsindex durch Bestrahlung mit ultravioletten Strahlen,
- Abscheidung der Schicht mit niedrigem Brechungsindex,
- Verdichten-Vernetzen der abgeschiedenen Schicht mit niedrigem Brechungsindex durch Bestrahlen mit ultravioletten Strahlen,
- Aufbringen der verschleißfesten Schicht auf die Schicht mit niedrigem Brechungsindex,
- thermisches Behandeln der Gesamtanordnung von aufgebrachten Schichten und Substrat.

**32.** Lösung in einem Lösungsmittel, die enthält eine Vorläufer-Molekülverbindung auf Basis von Tantal, ausgewählt aus den Tantalpentahalogeniden $TaX_5$ mit X = F, Br, I oder Cl und gegebenenfalls ein oder mehrere weitere Metall- oder Metalloid-Verbindungen, die von Tantal verschieden sind.

**33.** Lösung nach Anspruch 32, in der das Lösungsmittel ausgewählt ist aus den gesättigten aliphatischen Alkoholen der Formel ROH, worin R für eine Alkylgruppe mit 1 bis 5 Kohlenstoffatomen steht.

**34.** Lösung nach Anspruch 32, in der die weitere(n) Verbindung(en) ausgewählt ist (sind) aus den Metall- oder Metalloid-alkoxiden, -halogeniden und anderen Salzen.

**35.** Lösung nach Anspruch 32, in der das Metall oder Metalloid ausgewählt ist aus der Gruppe Tantal, Titan, Silicium, Yttrium, Scandium, Zirkonium, Hafnium, Thorium, Niob, Lanthan, Aluminium und Magnesium.

**36.** Lösung nach Anspruch 32, in der die Konzentration der VorläuferVerbindung auf Basis von Tantal und gegebenenfalls einer oder mehrerer anderer Metall- oder Metalloid-Verbindungen 1 bis 20, vorzugsweise 5 bis 10 % $Ta_2O_5$-Äquivalent-Massenprozent oder Metall- oder Metalloidoxid-Äquivalent-Massenprozent in dem Lösungsmittel entpricht.

**37.** Lösung nach einem der Ansprüche 33 bis 36, **dadurch gekennzeichnet, dass** die in der Lösung im Überschuss enthaltenen Halogenidionen aus derselben eliminiert werden.

**38.** Lösung nach Anspruch 37, **dadurch gekennzeichnet, dass** die in der Lösung im Überschuss enthaltenen Halogenidionen durch Eindampfen unter vermindertem Druck und anschließendes Wiederauflösen eliminiert werden.

**39.** Lösung nach Anspruch 37, **dadurch gekennzeichnet, dass** die in der Lösung im Überschuss enthaltenen Halogenidionen durch chemische Neutralisation eliminiert werden.

**40.** Lösung einer Vorläufer-Molekülverbindung auf Basis von Tantal, ausgewählt aus der Gruppe Tantalpentachlorid und Tantalchloroethoxid $TaCl_2(OEt)_3$ in Ethanol, die gegebenenfalls mit $NH_3$ neutralisiert ist.

**41.** Lösung von $TaCl_2(OEt)_3$ in Ethanol in einer Konzentration von 5 bis 10 $Ta_2O_5$-Äquivalent-Massenprozent.

## Claims

**1.** Inorganic polymeric material, **characterized in that** said material is based on tantalum oxide densified or cross-linked by a heat treatment at a temperature below 200°C or by exposure to ultraviolet rays and **in that** said material also incorporates residual halide ions.

**2.** Polymeric material according to claim 1, **characterized in that** said material comprises an inorganic, densified or cross-linked, tantalum oxyhydroxide polymer.

**3.** Material according to claim 1, **characterized in that** said halide ions are chloride ions.

4. Material according to claim 1, **characterized in that** it comprises, apart from tantalum oxide, at least one other metal or metalloid oxide chosen from, among titanium oxide, yttrium oxide, scandium oxide, zirconium oxide, hafnium oxide, thorium oxide, niobium oxide, lanthanum oxide, aluminium oxide, magnesium oxide or silicon oxide.

5. Material according to claim 4, **characterized in that** the metal or metalloid oxide is present in a proportion of from 1 to 99% by mass, with respect to the total mass of metal and metalloid oxides.

6. Material according to any one of claims 1 to 5, **characterized in that** said inorganic polymeric material is a material with a high refractive index.

7. Method of preparing and depositing the inorganic polymeric material according to claim 1, **characterized in that** it comprises steps consisting of:

- preparing a solution (1) in a solvent (3) comprising a molecular precursor compound based on tantalum chosen from among tantalum pentahalides $TaX_5$ with X=F, Br, I or Cl;

- possibly mixing said solution (1) with a solution in a solvent of the same kind comprising a compound of a metal or metalloid other than tantalum or adding said metal or metalloid compound to said solution (1); by means of which a solution (2) is obtained;

- depositing the solution (1) or (2) obtained onto a support to form a uniform layer of polymeric material, and

- cross-linking, densifying this polymeric layer based on tantalum oxide by a heat treatment at a temperature below 200°C, or by an exposure to ultraviolet rays, possibly followed by an annealing step or a post-treatment heating step.

8. Method according to claim 7, **characterized in that** said heat treatment is carried out at a temperature of from 100 to less than 200°C for a period of from 2 to 150 minutes.

9. Method according to claim 7, **characterized in that** said exposure to ultraviolet rays is carried out with an energy of from 5 to 10 $J/cm^2$ for a period of from 10 seconds to 10 minutes.

10. Method according to claim 7, **characterized in that** the solvent is chosen from among the saturated aliphatic alcohols of formula ROH, where R represents an alkyl group with from 1 to 5 carbon atoms.

11. Method according to claim 7, **characterized in that** the annealing step, or the post-treatment heat treatment, is carried out at a temperature of from 80 to 200°C for 10 to 60 minutes.

12. Method according to claim 7, **characterized in that** the halide ions in excess in solution (1) are removed from this solution.

13. Method according to claim 12, **characterized in that** the halide ions in excess in solution (1) are removed by evaporation under reduced pressure and then redissolution.

14. Method according to claim 12, **characterized in that** the halide ions in excess in solution (1) are removed by chemical neutralization.

15. Method according to claim 7, **characterized in that** solution (1) is a solution in ethanol, possibly neutralized by $NH_3$, of a molecular precursor compound based on tantalum, chosen from among tantalum pentahalide and tantalum chloro-ethoxide $TaCl_2(OEt)_3$.

16. Optical material, **characterized in that** it comprises a substrate of an organic or inorganic nature, covered by at least one layer of the inorganic polymeric material based on tantalum oxide according to any one of claims 1 to 5.

17. Optical material, **characterized in that** it comprises a substrate of an organic or inorganic nature, covered by at least one layer of the inorganic polymeric material based on tantalum oxide according to claim 6.

18. Optical material according to claim 17, **characterized in that** it comprises, in addition, at least one layer chosen

from among:

- a layer with a low refractive index, for example, based on colloids of silicon oxide, calcium fluoride or magnesium fluoride encased or not in a siloxane binder, or silicon oxide or magnesium oxide in polymeric form,
- a layer with a medium refractive index, formed from a polymeric material based on tantalum oxide and another metal oxide,
- an anti-abrasive layer, based on a fluorinated silane.

**19.** Material according to claim 18, **characterized in that** the layers with low or medium refractive index are densified or cross-linked polymeric layers.

**20.** Optically active material according to claim 18, having anti-glare properties with a wide spectral band, **characterized in that** it comprises a substrate of organic or inorganic nature, covered successively by:

- a layer with a medium refractive index;
- a layer with a high refractive index;
- a layer with a low refractive index;
- possibly an anti-abrasive layer.

**21.** Optical material according to claim 18, having anti-glare properties with a narrow spectral band, **characterized in that** it comprises a substrate of organic or inorganic nature, covered successively by:

- a layer with a high refractive index;
- a layer with a low refractive index;
- possibly an anti-abrasive layer.

**22.** An optical material according to claim 18, having reflecting properties, **characterized in that** it comprises a substrate of organic and inorganic nature, covered successively by at least one sequence of two layers comprising:

- a layer with a low refractive index;
- a layer with a high refractive index;
- possibly an anti-abrasive layer.

**23.** Optical material according to claim 18, 20, 21 or 22, **characterized in that** the substrate is an organic substrate covered by a lacquer.

**24.** Optical material according to claim 18, 20, 21 or 22, **characterized in that** the layer with a medium refractive index is formed from a polymeric material based on tantalum oxide and silicon or magnesium oxide, the relative proportions in tantalum oxide and silicon or magnesium oxide equivalents, $Ta_2O_5/SiO_2$ or $Ta_2O_5$/Mgo varying from 0/100 to 100/0, by means of which the refractive index of the polymeric layer obtained can be modulated at will.

**25.** Optical material according to claim 18, 20, 21 or 22, **characterized in that** the layer with a low refractive index is a layer formed from polymeric silicon chosen from among polymeric silica prepared in an HCl medium, polymeric silica prepared in an $HNO_3$ medium and oligomeric silica.

**26.** Optical material according to claim 18, 20, 21 or 22, **characterized in that** the anti-abrasive layer is formed from $C_6F_{13}$-$CH_2CH_2$-$Si(OEt)_3$ or $C_6F_{13}$-$CH_2CH_2$-$SiCl_3$.

**27.** Method of preparing an anti-glare material with a wide spectral band according to claim 20, **characterized in that** it comprises the following steps:

- cleaning-scouring the substrate;
- depositing on the cleaned substrate of the layer with medium refractive index;
- possibly thermal cross-linking or densification of the deposited layer with a medium refractive index;
- cleaning-scouring;
- deposition of the layer with a high refractive index based on $Ta_2O_5$;

- possibly thermal cross-linking or densification of the deposited layer with a high refractive index;
- cleaning-scouring as previously;
- deposition of the layer with a low refractive index;
- possibly thermal cross-linking or densification of the deposited layer with a low refractive index;
- application of the anti-abrasive layer onto the layer with a low index;
- heat treatment.

**28.** Method according to claim 27, **characterized in that**, following the deposition of the layer with a high refractive index based on $Ta_2O_5$, the cross-linking or densification of this layer and the cleaning and scouring of this layer, a period of from 1 to 24 hours is allowed to pass before carrying out a second scouring of the layer with a high refractive index and depositing the layer with a low refractive index.

**29.** Method according to claim 27, **characterized in that**, following the deposition of the layer with a high refractive index based on $Ta_2O_5$, a treatment is carried out of rinsing the deposited layer with a mixture of ammonia and ethanol. a heat treatment is then carried out under reduced pressure and the rinsing with ammonia/ethanol is repeated and then the cross-linking or densification of the layer with a high refractive index before depositing the layer with a low refractive index.

**30.** Method according to claim 29, **characterized in that** a period of from 1 to 24 hours is allowed to pass following the final rinsing with the ammonia/ethanol mixture before carrying out the deposition of the layer with a low index.

**31.** Method of preparing an anti-glare material with a wide spectral band according to claim 20, **characterized in that** it comprises the following steps:

- cleaning-scouring the substrate;
- depositing on the cleaned substrate of the layer with medium refractive index;
- possibly a cross-linking or densification of the deposited layer with a medium refractive index by exposure to ultra-violet rays;
- deposition of the layer with a high refractive index based on $Ta_2O_5$;
- possibly a cross-linking or densification of the deposited layer with a high refractive index by exposure to ultra-violet rays;
- deposition of the layer with a low refractive index;
- cross-linking or densification of the deposited layer with a low refractive index by exposure to ultra-violet rays; _
- application of the anti-abrasive layer onto the layer with a low index;
- heat treatment of the whole of the applied layers and the substrate.

**32.** Solution in a solvent comprising a precursor molecular compound based on tantalum chosen from among tantalum pentahalides $TaX_5$, with X=F, Br, I or Cl and optionally one or more other metal or metalloid compounds other than tantalum.

**33.** Solution according to claim 32, wherein said solvent is chosen from among saturated aliphatic alcohols of formula ROH, in which R represents an alkyl group with 1 to 5 carbon atoms.

**34.** Solution according to claim 32, wherein said other compound or compounds are chosen from among alkoxides, halides and other metal or metalloid salts.

**35.** Solution according to claim 32, wherein said metal or metalloid is chosen from among tantalum, titanium, silicon, yttrium, scandium, zirconium, hafnium, thorium, niobium, lanthanum, aluminium and magnesium.

**36.** Solution according to claim 32, wherein the concentration of the tantalum-based precursor and optionally the other metal or metalloid compound or compounds is 1 to 20%, preferably 5 to 10% equivalent by mass of $Ta_2O_5$ or metal or metalloid oxide in the solvent.

**37.** Solution according to any one of the claims 33 to 36, wherein the excess halide ions in the solution are eliminated therefrom.

**38.** Solution according to claim 37, wherein the excess halide ions in the solution are eliminated by evaporation under reduced pressure, followed by redissolving.

**39.** Solution according to claim 37, wherein the excess halide ions in the solution are eliminated by chemical neutralization.

**40.** Solution in ethanol, optionally neutralized by $NH_3$, of a tantalum-based precursor molecular compound chosen from among tantalum pentachloride and tantalum chloroethoxide $TaCl_2(OEt)_3$.

**41.** Solution of $TaCl_2(OEt)_3$ in ethanol in a concentration of 5 to 10% mass equivalent of $Ta_2O_5$.

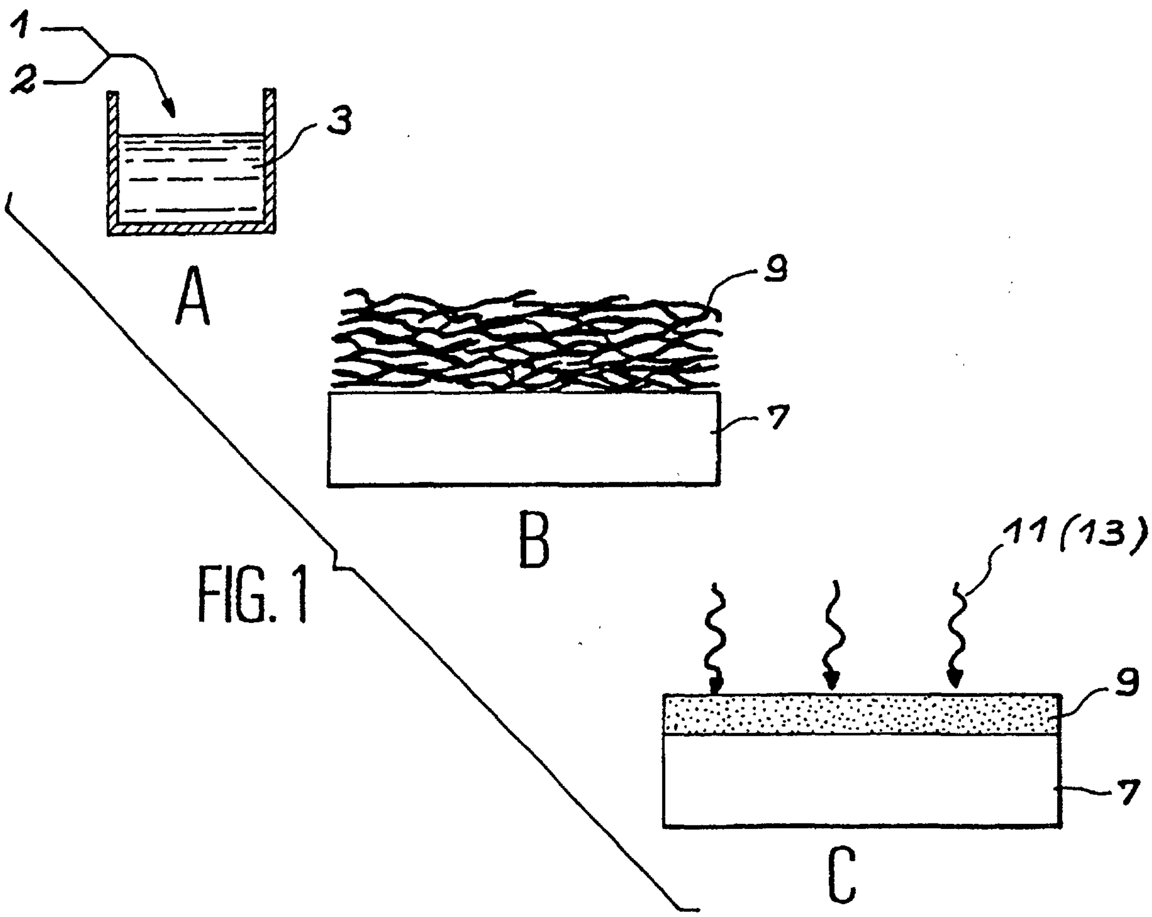


FIG. 1

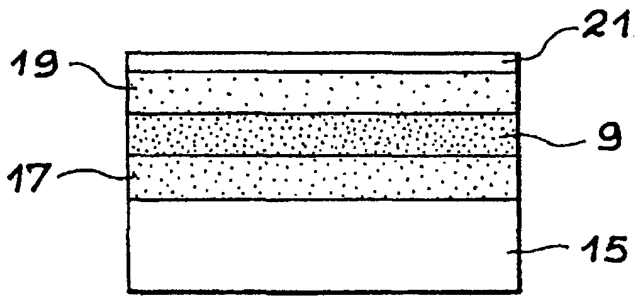


FIG. 2

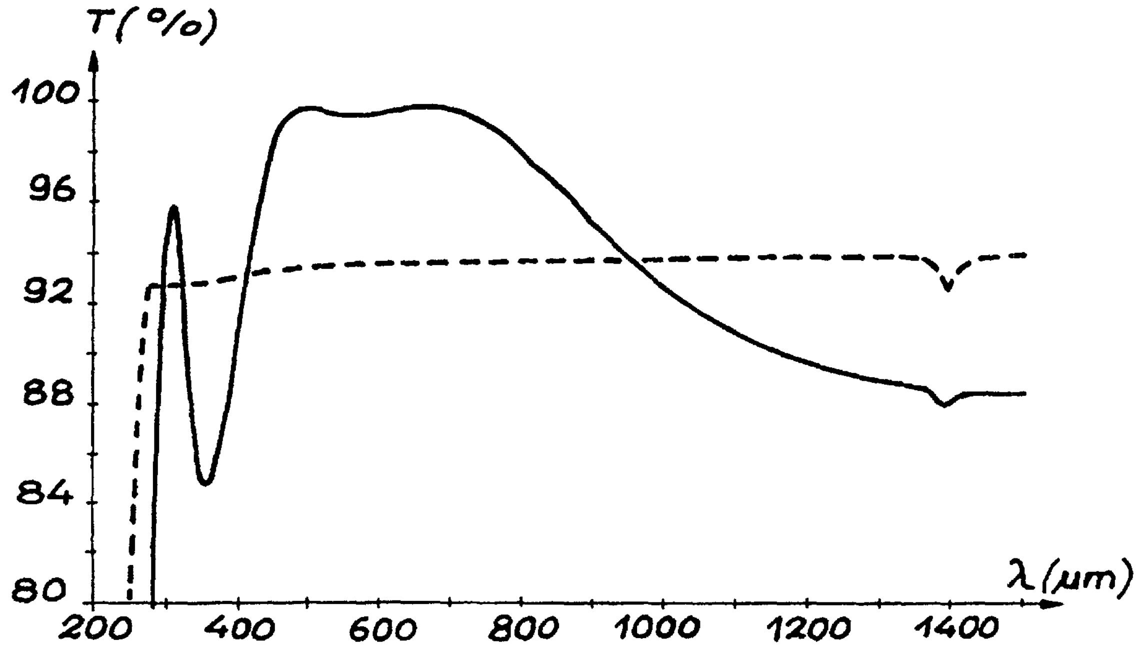


FIG. 3

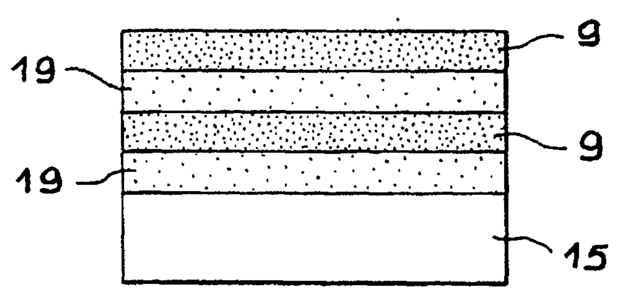


FIG. 4